Europäisches Patentamt

European Patent Office

Office européen des brevets

(19)

(11)  EP 1 413 852 A1

(12)  **EUROPEAN PATENT APPLICATION**
published in accordance with Art. 158(3) EPC

(43) Date of publication:
28.04.2004  Bulletin 2004/18

(51) Int Cl.⁷: **G01B 11/26**, G01N 21/95,
G01B 11/30, G11B 7/26,
G01B 11/00

(21) Application number: 02749357.6

(22) Date of filing: 24.07.2002

(86) International application number:
**PCT/JP2002/007495**

(87) International publication number:
**WO 2003/010488 (06.02.2003 Gazette 2003/06)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **27.07.2001 JP 2001228579**

(71) Applicant: Hamamatsu Metrix Co., Ltd.
Hamamatsu-shi, Shizuoka 431-2103 (JP)

(72) Inventor: **ICHIFUJI, Katsumi,
HAMAMATSU METRIX CO., LTD.
Hamamatsu-shi, Shizuoka 431-2103 (JP)**

(74) Representative: **VOSSIUS & PARTNER
Siebertstrasse 4
81675 München (DE)**

(54)  **COMPOSITE OPTICAL SENSOR UNIT AND OPTICAL DISK INSPECTION DEVICE USING IT**

(57)  The present invention aims at providing a composite optical sensor unit and an inspection device using the same. At a time and in combination, inspection items such as the optical tilt, surface deflection, eccentricity, reflectivity and appearance of an optical disk which have been performed individually at separate inspection stages. Accordingly, the composite optical sensor unit and the inspection device using the composite optical sensor unit of the present invention comprise a laser beam source LD1, a scanner mirror 13 for distributing a laser beam from the laser beam source at a high speed, a first beam splitter 15 for irradiating beams distributed by the scanner mirror vertically onto an object of inspection 16 having a concentric diffraction lattice, a fifth light receiving element PSD for two-dimensional position detection that receives a zero-order diffraction light 19 reflected from the object of inspection via the first beam splitter and detects a light receiving position, and a second light receiving element PD2 for receiving an n-order diffraction light 23 reflected from the object of inspection and detecting a received quantity of light.

Fig. 1

$$\alpha = \mathrm{Sin}\,\alpha = (m\times\lambda)/d$$
$\lambda$: wavelength
d: lattice distance
m: number of order

inspection
visual field

EP 1 413 852 A1

**Description**

Technical Field

The present invention relates to a technique for detecting an inclination (an optical tilt), a vertical run-out, eccentricity, defects, reflectivity or the like of an object of inspection such as a rotary disk body or the like with high accuracy, and more particularly to a composite optical sensor unit for detecting an optical tilt, a vertical run-out, a quantity of radial eccentricity, a defect in appearance, reflectivity and the like of a medium having a concentric diffraction lattice such as a CD (compact disk) , a DVD-R, DVD-R/W, a DVD-RAM, a CD-R, a CD-R/W, MO or the like (the medium being referred to as "optical disk" hereinafter) and an inspection device which uses the unit.

Background Art

In an optical disk manufacturing step, it is often the case that due to a deadweight of the optical disk or manufacturing conditions, particularly in a DVD replication laminating step, the optical disk per se is delicately warped and this leads to a defect which is referred to as surface deflection of the optical disk.

Further, although it is designed such that the center of rotation of the optical disk is aligned with the center of tracking, in an actual operation, there exists a case that the deviation (eccentricity) is generated between the center of rotation of the optical disk and the center of tracking in a DVD laminating step or a chucking step for mounting a media hub to the center of tracking after positioning.

Further, there may be a case that inner foreign materials (bubbles, inner impurities or the like), defects of a recording layer (pin holes, flaws, oil smears, abnormal molding or the like), surface defects (flaw on the surface, impurities attached to the surface or the like) and the like are present in the optical disk.

Conventionally, since these defects degrade the quality of optical disk products, the one hundred percent inline inspection has been performed. However, the inspection is generally performed such that a defect step is performed by inputting an image using a one-dimensional CCD camera. Further, and in a mechanical and optical inspection, the measurement based on an optical stylus method using a highly accurate optical pick-up or an inspection which combines a laser deviation meter is performed.

These methods have many problems. That is, in these methods, with respect to the appearance inspection, there is a limit in the operational speed of a CCD camera so that the resolution is not improved. On the other hand, in the mechanical and optical characteristics inspection, the optical pick-up having high accuracy is used as the sensor and hence, the structure is complicated whereby it is difficult to miniaturize the structure. Further, since the operational speed is low, it is not suitable for the in-line inspection. Further, the method is costly. In the in-line mechanical and optical characteristics inspection in which the laser deviation meter is incorporated, due to the restriction imposed on a tact time, there has been a problem that the inspection of the only selected several tracks can be performed.

Further, it is considerably difficult to simultaneously incorporate a one-dimensional camera, an optical pick-up and a laser deviation meter into a set of small inspection device which requires saving of space.

Further, a DVD capable of high density recording is formed by laminating substrates having a thickness of 0.6mm, wherein a fine track pitch is set to 0.74μm and a laser spot is also set to a value equal to or less than 1 μm. Due to such a constitution, a further progress is made with respect to high density and hence, the tolerance and limit values of various mechanical and optical conditions including defects in appearance are extremely small.

This is particularly true with respect to a DVD-R, a DVD-R/W, a DVD-RAM, a CD-R, a CD-R/W which are capable of writing/rewriting.

Further, in the midst of era in which the high-speed operation has been sought, it is not easy to make a focus servo or a tracking servo to follow the optical disk in a stable manner at a high speed with high accuracy of sub micron order. Accordingly, it is more necessary to hold the accuracy of products compared to the current situation. Accordingly, in respective steps of optical disk manufacturing consisting of a replica forming step, a recording layer forming step and a protective film forming step, it is indispensable to perform the one-hundred-percent inspection including not only the appearance inspection but also the inspection of mechanical and optical characteristics. Particularly, in the in-line one-hundred-percent inspection step which requires the introduction of large number of inspection devices, recently, there has been a demand for an advent of an inspection device which can perform a plurality of inspection items over the entire surface of the optical disk using one set of miniaturized inspection device at a high speed and, at the same time, can exhibit the excellent maintenance property and can be manufactured at a low cost thus capable of enhancing the effective productivity.

It is an object of the present invention to provide a high-speed composite optical sensor unit and an optical disk inspection device using such a unit which can realize these various demands.

Disclosure of Invention

The composite optical sensor unit according to the present invention includes a laser beam source, a scanner mirror for distributing laser beams from the laser beam source at a high speed,

a first beam splitter for applying laser beams distributed by the scanner mirror vertically onto an object of inspection having a concentric diffraction lattice,

a fifth light receiving element for two-dimensional position detection that receives a zero-order diffraction light reflected from the object of inspection via the first beam splitter and detects a light receiving position,

a second light receiving element for receiving an n-order diffraction light reflected from the object of inspection and detecting a received quantity of light.

In this case, it is preferable that the scanner mirror which distributes the laser beams from the laser beam source at a high speed is mounted on a semiconductor resonance type one-dimensional scanner.

It is also preferable that the scanner mirror which distributes the laser beams from the laser beam source at a high speed is mounted on a semiconductor resonance type one-dimensional scanner and, at the same time, irradiates laser beams to the object of inspection having the concentric diffraction lattice in the radial direction of the object of inspection.

An optical disk inspection device according to the present invention includes a laser beam source, a scanner mirror for distributing laser beams from the laser beam source at a high speed,

a spindle motor for rotating an object of inspection having a concentric diffraction lattice,

a first beam splitter for irradiating laser beams distributed by the scanner mirror vertically onto the object of inspection which is rotated by the spindle motor,

a fifth light receiving element for two-dimensional position detection that receives a zero-order diffraction light reflected from the object of inspection via the first beam splitter and detects the light receiving position,

a second light receiving element for receiving an n-order diffraction light reflected from the object of inspection and detecting a received quantity of light, wherein

an optical tilt of the object of inspection is calculated based on a detection signal of the fifth light receiving element,

a vertical run-out is calculated based on the optical tilt,

an eccentricity of the object of inspection is calculated based on a detection signal of the second light receiving element, and

an appearance inspection of the object of inspection is performed based on the detection signal of the fifth light receiving element and the detection signal of the second light receiving element.

Further, an optical disk inspection device according to the present invention includes a laser beam source, a scanner mirror for distributing laser beams from the laser beam source at a high speed,

a spindle motor for rotating an object of inspection having a concentric diffraction lattice,

a first beam splitter for irradiating laser beams distributed by the scanner mirror vertically onto the object of inspection which is being rotated by the spindle motor,

a fifth light receiving element for two-dimensional position detection that receives a zero-order diffraction light reflected from the object of inspection via the first beam splitter and detects the light receiving position,

a second light receiving element for receiving an n-order diffraction light reflected from the object of inspection and detecting a received quantity of light, wherein

an optical tilt of the object of inspection is calculated based on a detection signal of the fifth light receiving element,

a vertical run-out is calculated based on the optical tilt,

an eccentricity of the obj ect of inspection is calculated based on a detection signal of the second light receiving element, and

an appearance inspection of the object of inspection is performed based on the detection signal of the fifth light receiving element and the detection signal of the second light receiving element, and

a reflectivity of the object of inspection is calculated based on the detection signal of the fifth light receiving element and the detection signal of the second light receiving element.

In this case, it is preferable that the detection signal of the second light receiving element is a signal which contains an ON/OFF signal of the n-order diffraction light at a boundary between the concentric diffraction lattice and a mirror portion.

Further, it is preferable that a second beam splitter is provided between the first beam splitter and the fifth light receiving element, the zero-order diffraction light reflected on the object of inspection is received by a first light receiving element in place of the fifth light receiving element via the second beam splitter, and the reflectivity of the object of inspection is calculated based on the detection signal of the first light receiving element and the detection signal of the second light receiving element.

Further, it is also preferable that the appearance inspection is configured to detect types of defects in a separated manner by comparing a change of light quantity and the time-sequential deviation between the detection signal of the fifth light receiving element and the detection signal of the second light receiving element.

It is also preferable to judge whether the object of inspection is within a given standard value by comparing results of the optical tilt, a vertical run-out, eccentricity, reflectivity and the appearance inspection with respective predetermined values.

Brief explanation of drawings

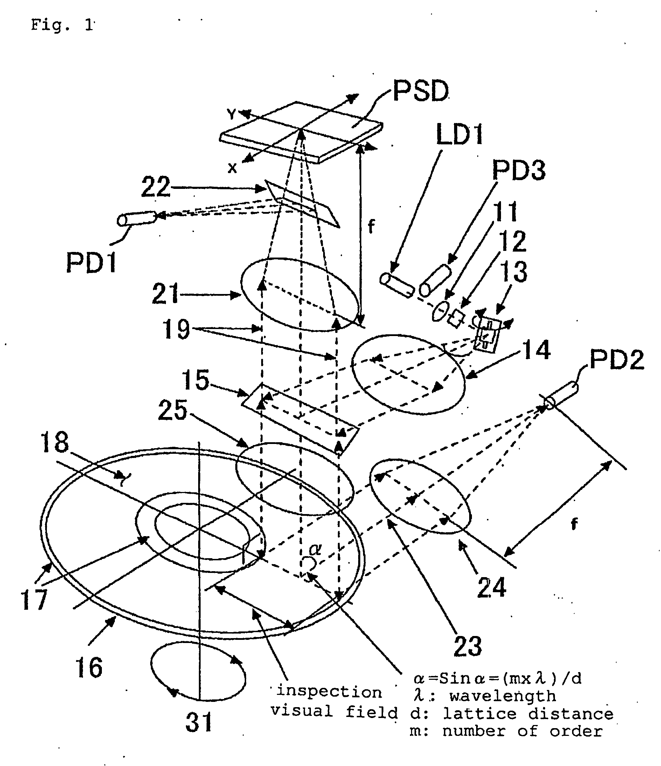

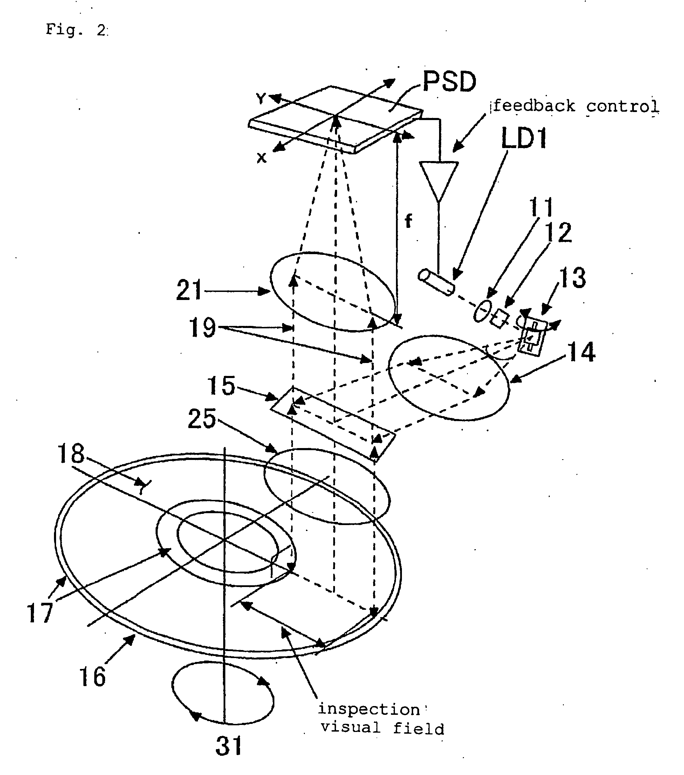

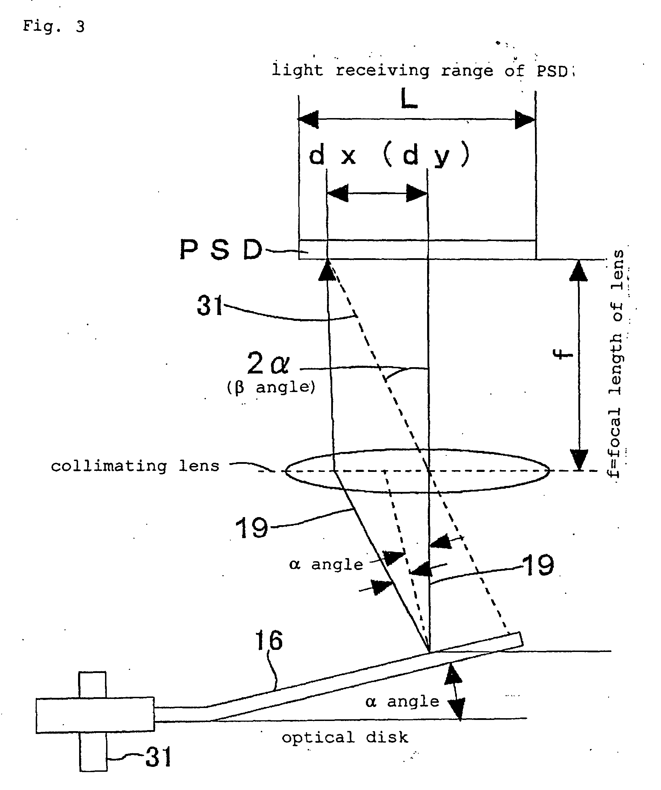

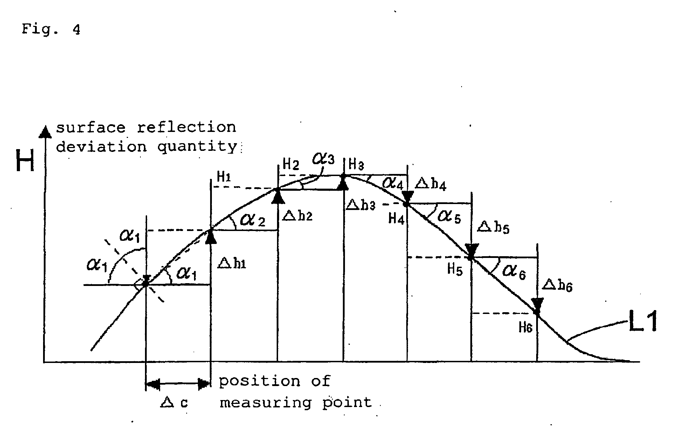

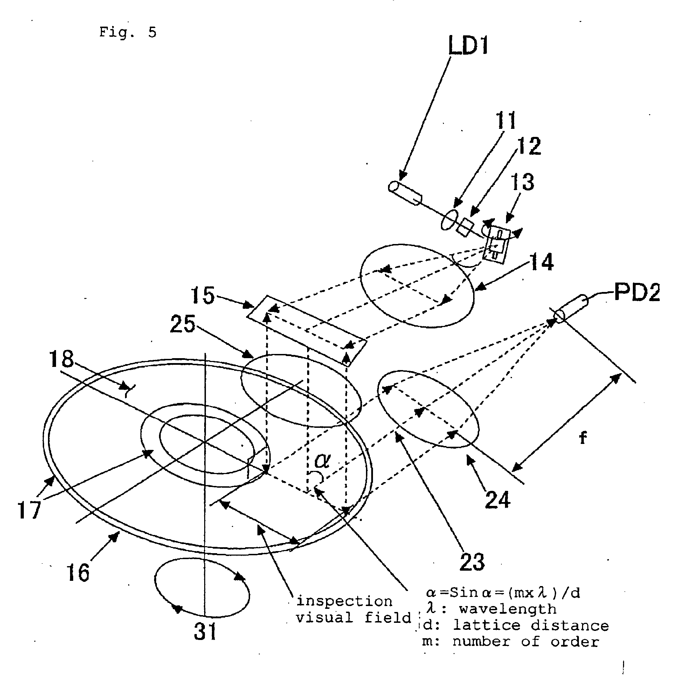

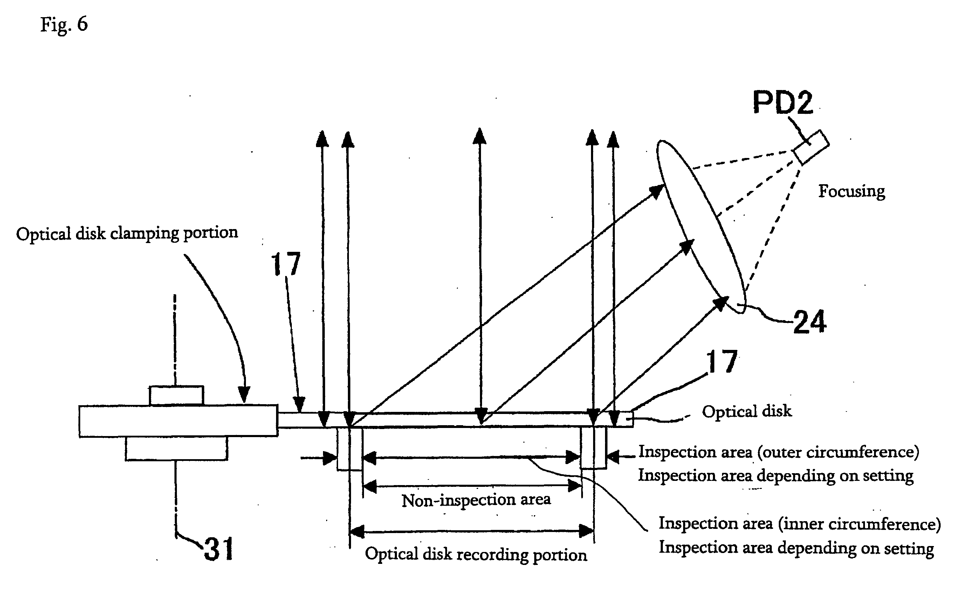

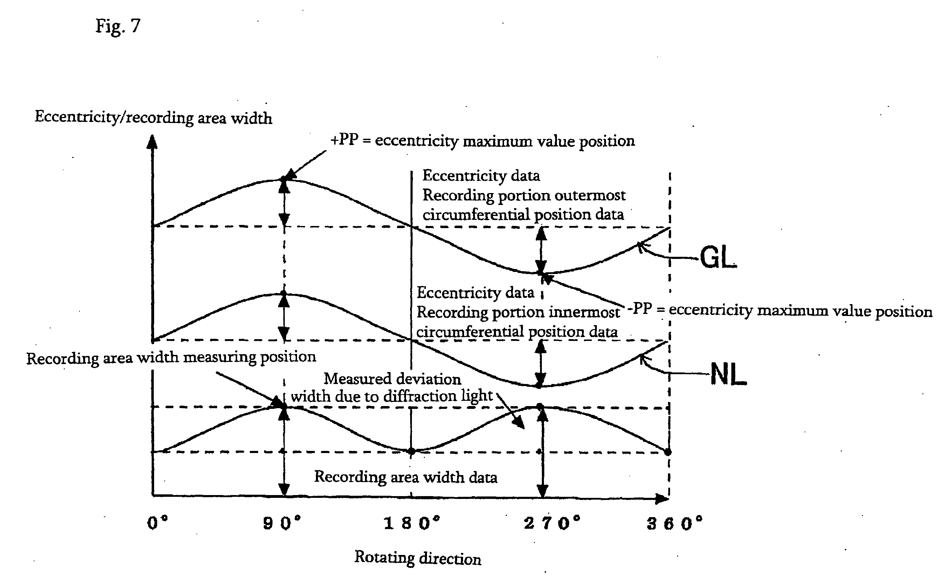

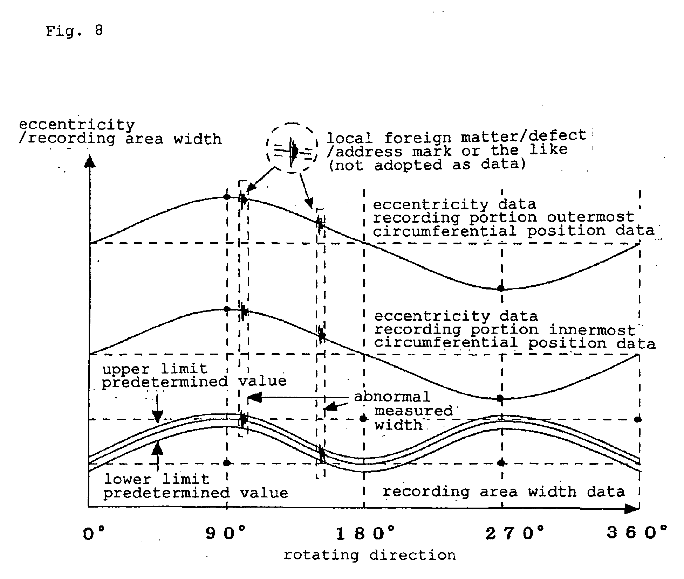

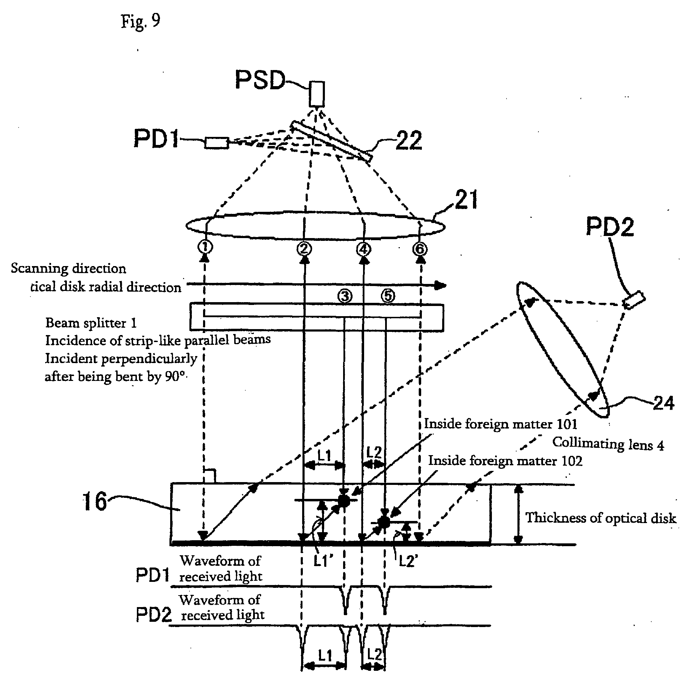

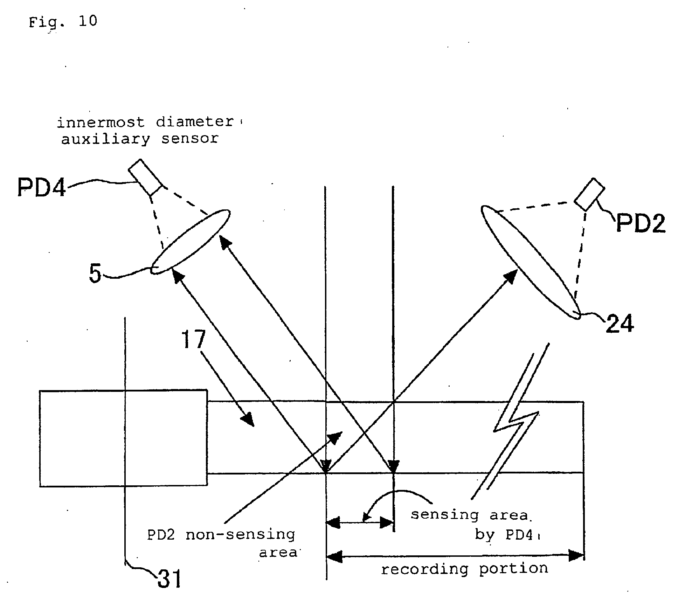

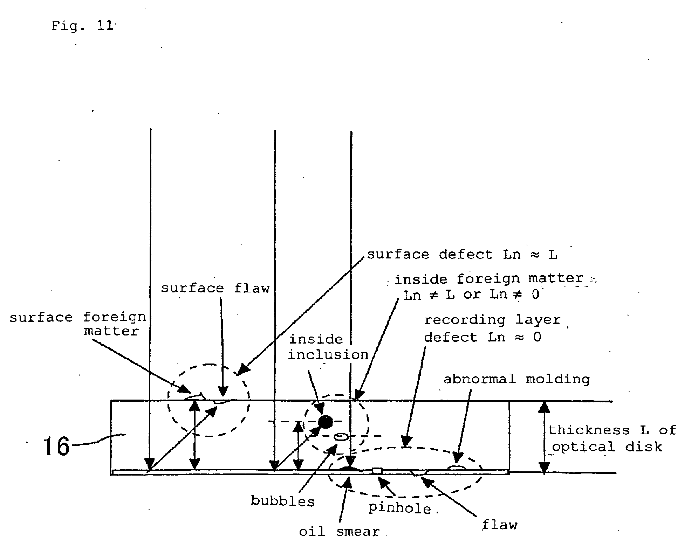

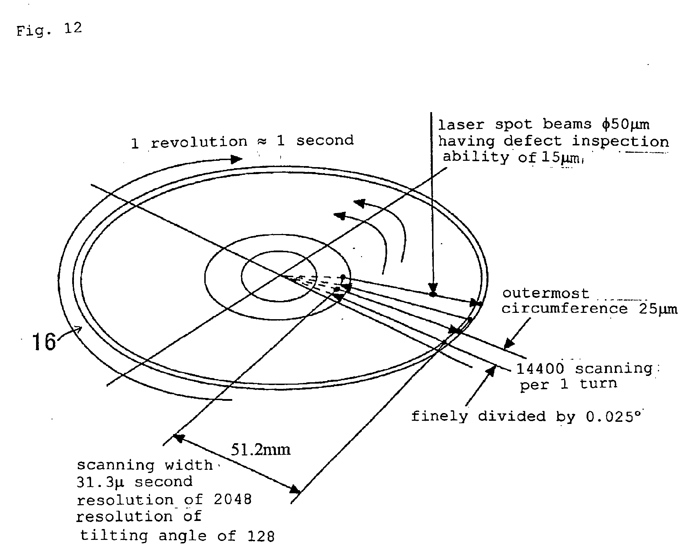

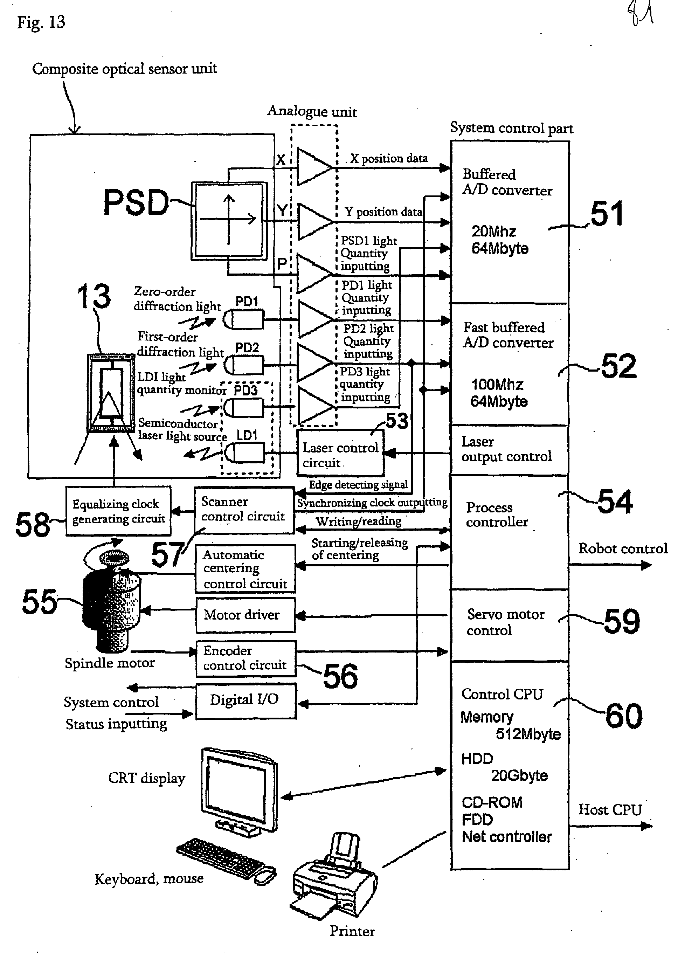

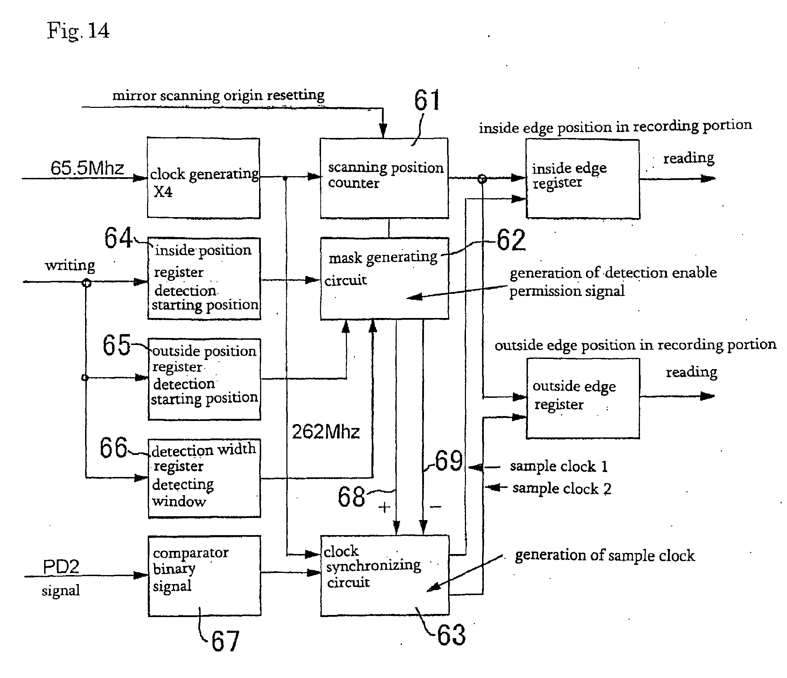

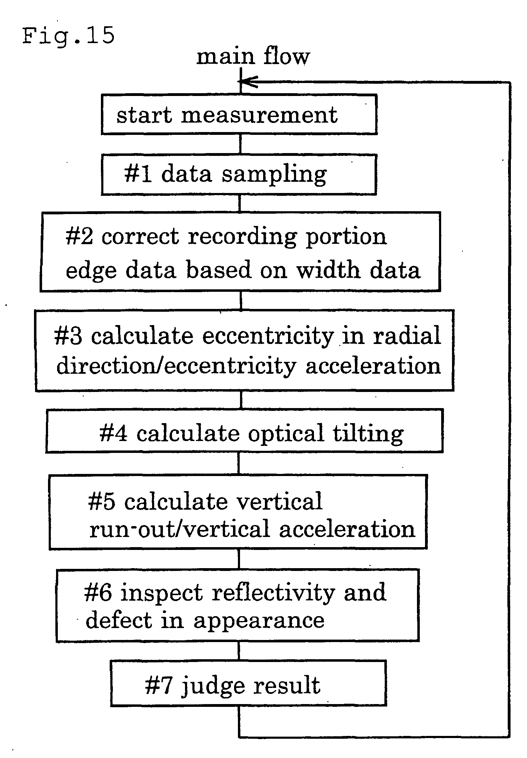

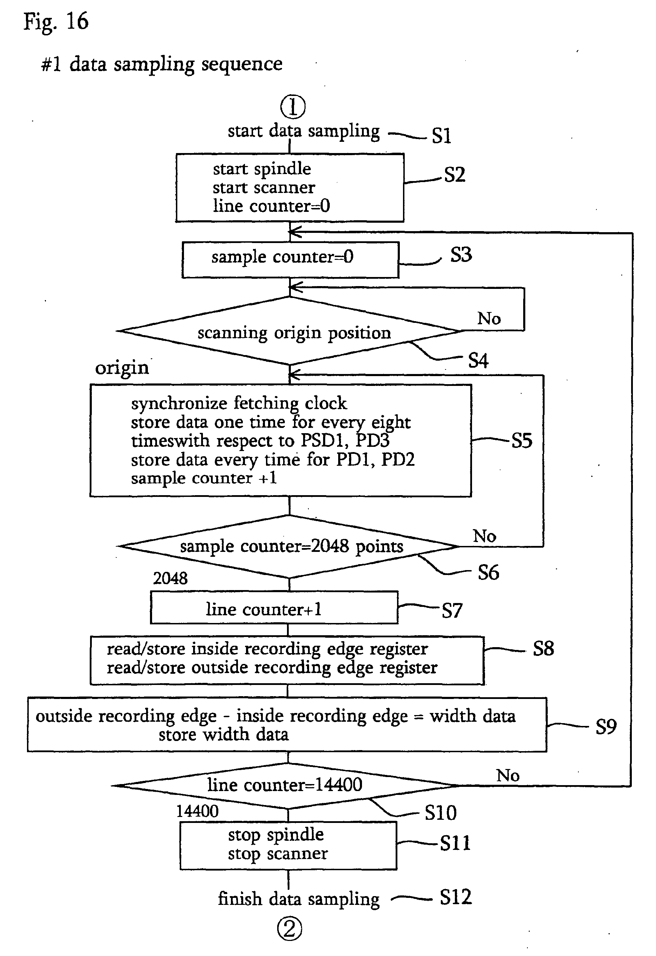

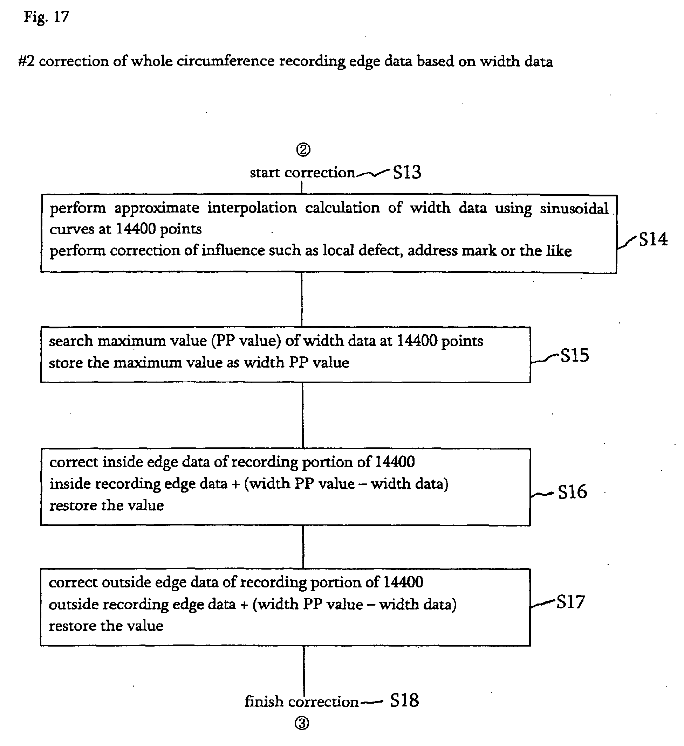

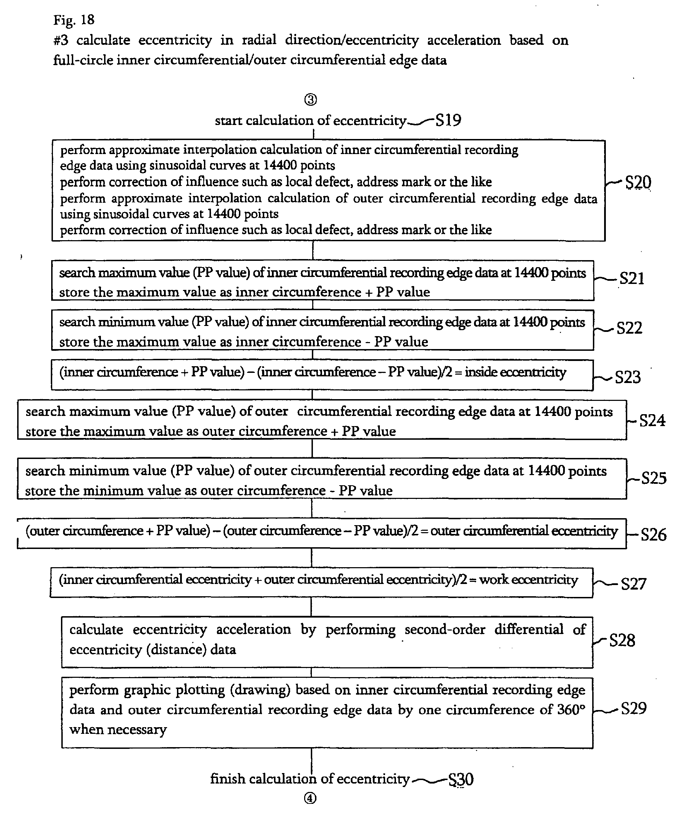

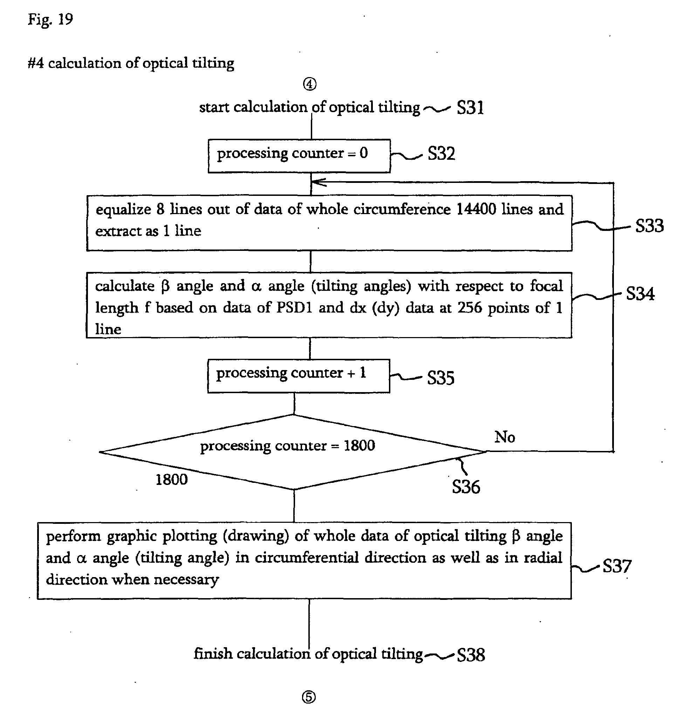

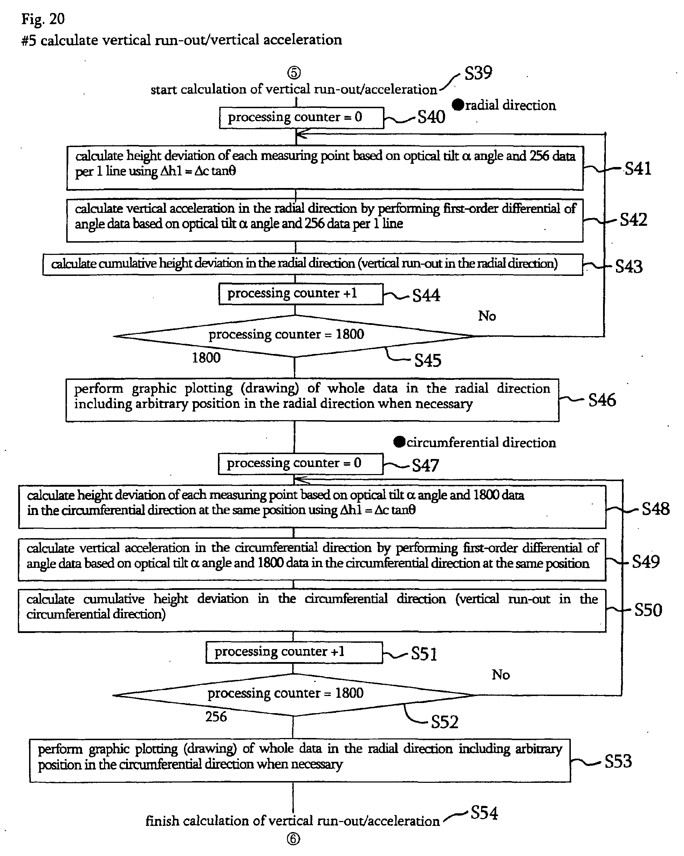

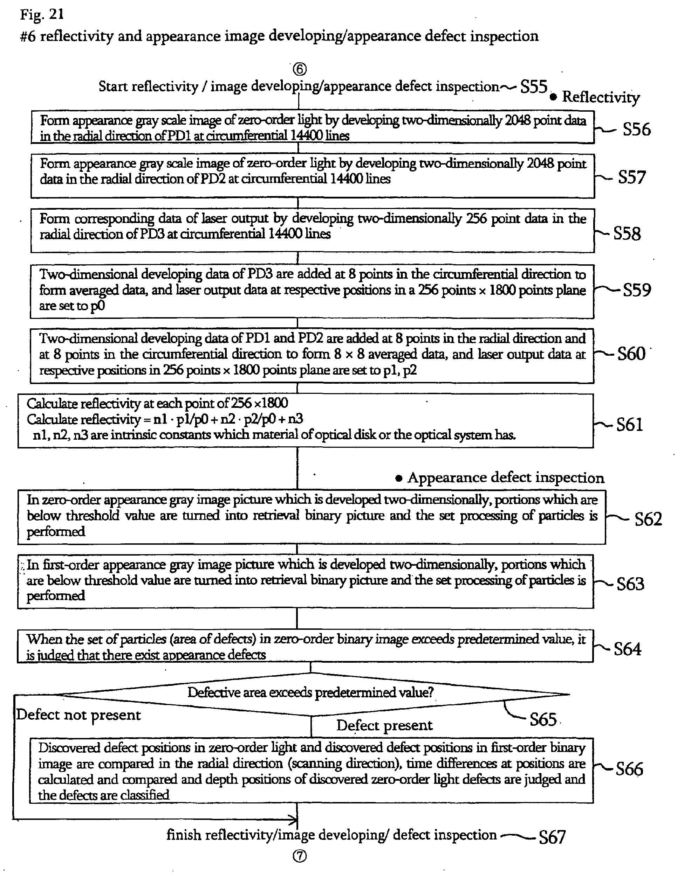

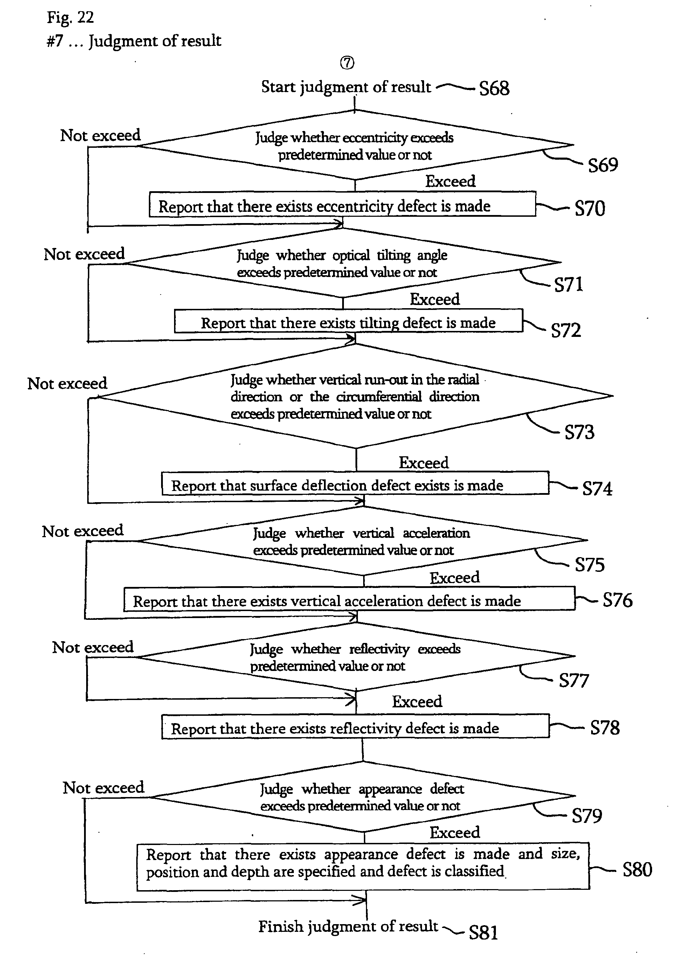

Fig. 1 is a schematic view showing the basic constitution of a composite optical sensor unit as one embodiment of the present invention. Fig. 2 is a schematic view of a detection optical system of an optical tilt and a vertical run-out which are extracted from Fig. 1. Fig. 3 is an explanatory view for explaining a principle of an optical tilt detection optical system. Fig. 4 is a graph in which a vertical run-out H calculated based on Table 1 is taken on an axis of abscissas and a position of inspection point is taken on an axis of ordinates. Fig. 5 is a schematic view in which an optical system for measuring eccentricity is extracted from Fig. 1 in the present invention. Fig. 6 is a schematic view showing a method for measuring eccentricity between the center of rotation of an optical disk and the center of tracks. Fig. 7 is a graph depicting ON/OFF positions of light reception of 1-order diffraction light at a second light receiving element. Fig. 8 is a schematic view showing local abnormal data present at an edge of a recording part. Fig. 9 is an explanatory view of a method for measuring a depth position of existing defects. Fig. 10 shows an embodiment which is provided with a fourth light receiving element PD4 for obviating a non-inspection region (PD2 non-sensing region). Fig. 11 is a schematic view for classifying the defects into three consisting of inner foreign materials, recording layer defects and surface defects. Fig. 12 is an example of an optical disk inspection device using the composite optical sensor unit of the present invention. Fig. 13 shows an embodiment of the optical disk inspection device of the present invention, wherein the whole constitution of the optical disk inspection device and signal processing in the device are shown. Fig. 14 is a block diagram showing one embodiment of a measuring edge sensor circuit for measuring eccentricity which is assembled to the optical disk inspection device of the present invention. Fig. 15 is a main flow when the optical disk is continuously inspected. Fig. 16 shows the detail of a step for explaining a sampling step of data expressed by #1 indicated in Fig. 15. Fig. 17 shows a detail of step for correcting the whole circumference recording edge (position of recording part) in view of the width data of #2 shown in Fig. 15. Fig. 18 shows a detail of a step for calculating a radial eccentricity/radial acceleration based on edge data of the full inner-outer circumferences #3 shown in Fig. 15. Fig. 19 shows the detail of a step for calculating an optical tilt of #4 shown in Fig. 15. Fig. 20 shows the detail of a step for calculating a vertical run-out/vertical acceleration of #5 shown in Fig. 15. Fig. 21 shows the detail of a step of the reflectivity of #6 shown in Fig. 15 and the appearance image development/outer defects inspection. Fig. 22 shows the detail of a step for judging a result of #7 shown in Fig. 15.

Best Mode for Carrying out the Invention

Modes for carrying out a composite optical sensor unit and an optical disk inspection unit using such a sensor unit of the present invention are explained in detail in conjunction with drawings.

(Basic constitution and basic operation of the composite optical sensor unit)

Fig. 1 shows the basic constitution of the composite optical sensor unit as one embodiment of the present invention. In Fig. 1, laser beams irradiated from a laser beam source LD1 are collimated (formed into a flux of parallel light beams) by a collimating lens 11 while having a light quantity thereof always detected and monitored by a third light receiving element PD3, for example, a PD (Photo Detector). Thereafter, the laser beams pass through a pin hole 12 and are formed into a spot light and the spot light is reflected on a mirror 13.

Here, the mirror 13 is mounted on a scanner which repeats one-dimensional scanning at a high speed with a wide angle and spot-like laser beams which are reflected on the mirror 13 are formed into parallel strip-like beams after passing through a collimating lens 14.

Then, the strip-like beams are reflected on a beam splitter 15 such that the advancing direction thereof is changed to a vertical direction (downward direction) and are vertically irradiated to a surface of an optical disk 16 which is rotatably supported by a spindle shaft 31.

With respect to the optical disk 16 which constitutes an object of inspection, a recording portion 18 which includes mirror portions 17 at an innermost circumference and an outermost circumference thereof is present on a surface of the optical disk 16.

The spot-like laser beams which are incident on a concentric diffraction lattice track of a plurality of pits formed in a surface of the optical disk 16 are divided into zero-order diffraction beams formed of positive reflection beams which follow the principle of reflection and higher-order diffraction beams which follow the principle of diffraction. The higher-order diffraction beams are divided into a large number of 1 to n-order diffraction beams which depend on an interval and a shape of diffraction lattices.

Here, as the scanner, an optical device or the like which can freely control the reflection direction of the incident beams may be preferably used. That is, a so-called semiconductor system resonance type one-dimensional scanner or the like is named.

The semiconductor system resonance type one-dimensional scanner is configured such that a coil pattern is formed on a miniaturized mirror surface formed on a silicon substrate, or on a circumference or a back surface of the miniaturized mirror surface, and the miniaturized mirror is tilted or oscillated within a given angle using both arms (torsion bars) of the silicon substrate as rotary shafts. By supplying an electric current to a coil while applying a magnetic field in a specified direction, a rotational torque attributed to Lorentz's force is generated and hence, it is possible to oscillate the miniaturized mirror surface to a position where the rotational torque balances the restoring force of the torsion bars (twisted shafts). As an example of the semiconductor system resonance type one-dimensional scanner, for example, ECOSCAN (trade mark), a product of Nihon Shingo., Ltd or the like can be considered.

The zero-order diffraction beams (positive reflection beams) 19 of the strip-like parallel laser beams which are vertically radiated to the optical disk 16 pass through the beam splitter 15 and arrive at a collimating lens 21.

Approximately one half of a quantity of strip-like beams from the collimating lens 21 pass through a beam splitter 22 and focus an image on a fifth light receiving element PSD arranged at a focal length f, for example, on the two-dimensional PSD (two-dimensional position sensitive detector), and the latter half beams are bent by 90 in the vertical direction by the beam splitter 22 and are incident on a first light receiving element PD (photo detector) PD1.

The two-dimensional PSD is a position detector for detecting two-dimensional positions and constitutes a type of auto collimator together with a collimating lens 21 and is served for detecting an optical tilt of the optical disk as will be explained later.

Here, the two-dimensional PSD is constituted of a P layer formed on a front surface of a planar silicon, an N layer formed on a rear surface of the planar silicon, and one intermediate layer. Beams incident on the PSD are subj ected to photo-electric conversion and are outputted as a photo electric current from electrodes mounted on the P layer and the N layer in a divided form and hence, the beam incident position of the beams can be obtained by calculation irrespective of the irradiation energy.

Here, to hold the high-speed performance, the first light receiving element PD1 is provided as auxiliary means to detect the change of light quantity of zero-order diffraction beams (positive reflection beams) together with the two-dimensional PSD. However, the first light receiving element PD1 is not always indispensable in the present invention.

Further, the strip-like parallel laser beams which are irradiated vertically to the optical disk 16 which constitutes an object of inspection generates the n-order diffraction beams in the radial direction toward the outer circumferential direction from the center of the tracks between the concentric diffraction lattice interval d and the wavelength of laser beams λ by the track which is constituted of rands and grooves at an angle α expressed by a following formula (1).

α of the n-order diffraction beams is obtained by the following formula.

$$\alpha = \mathrm{Sin}\,\alpha = (m \times \lambda)/d \qquad\qquad (1)$$

Here, λ : wavelength of laser beams, d : interval of concentric diffraction lattice, m : n-order diffraction degree

In an example of the 1-order diffraction beams 23 shown in Fig. 1, since m = 1 (1-order diffraction beams), α = Sin α = λ/d.

Accordingly, the angle α made by the positive reflection beams and the higher-order diffraction beams (1-order diffraction beams) does not depend on an incident angle of the laser beams to the concentric diffraction lattices but depends on the wavelength of laser beams (λ) and the interval (d) of concentric diffraction lattices.

However, in the above-mentioned formula (1), when m is increased (when the order of n is increased), the angle α is increased (equal to or greater than 90°) and hence, the reflection angle of the diffraction beams is disposed below the horizontal position whereby the inspection becomes impossible in this case.

To explain the angle α when n =1 by taking a case of DVD as an example, when the wavelength of the semiconductor laser beams is 650 nm and the track pitch d is 0. 74 μm, Sin α (1-order diffraction beams) = 650/0.74 ≈ 61. 45°.

In this manner, since the 1-order diffraction beams are reflected on the set angle α, by arranging the two-dimensional PSD which receives the 1-order diffraction beams in the direction of the angle, it is possible to receive the beams.

The embodiment shown in Fig. 1 is configured such that the n-order diffraction beams are set to the 1-order diffraction beams 23, the 1-order diffraction beams 23 is made to pass through a collimating lens 24 and are received by the second light receiving element PD2, for example, PD (Photo Director).

In the present invention, it is not necessary to restrict the n-order diffraction beams to the one-order diffraction beams and the suitable n-order diffraction beams may be used based on the angle α calculated by the formula (1).

Here, the optical disk 16 which constitutes the object of inspection has to be rotated one turn to inspect the whole surface of the recording portion including the mirror portion 17.

By rotating the optical disk 16 by one turn, it is possible to scan at a high speed the whole surface of the recording portion 18 including the mirror portion 17 using the strip-like beams generated by an optical system which is constituted by the semiconductor system resonance type one-dimensional scanner mirror 13.

Here, although the above-mentioned scanning using the strip-like beams can be realized using a galvanomirror, a polygon mirror or the like, to hold the miniaturized, light-weighted constitution and the high-speed performance, it is preferable to use the semiconductor system resonance type one-dimensional scanner mirror.

(optical tilt (= inclination) and vertical run-out)

Then, the detection of the optical tilt and the vertical run-out is explained in conjunction with Fig. 2 and Fig. 3. Fig. 2 is a view which schematically shows a detection optical system of the optical tilt and the vertical run-out in a form that the optical system is extracted from Fig. 1. Fig. 3 is an explanatory view for explaining the principle of the optical tilt detection optical system.

In Fig. 2 and Fig. 3, it is possible to inspect the optical tilt and the vertical run-out by detecting the zero-order diffraction beams (positive reflection beams) 19 using the fifth light receiving element PSD.

As shown in Fig. 3, when the optical disk 16 is set such that the optical disk 16 makes an inclination angle $\alpha$ with respect to a spindle shaft (disk rotary shaft) 31, by rotating the spindle shaft 31, the zero-order diffraction beams 19 on the two-dimensional PSD beam receiving surface which constitutes the fifth light receiving element PSD depicts a circle having a radius of $2 \alpha \cdot f$. Here, f indicates a focal length of the collimating lens and $\alpha$ indicates a minute inclination angle of the optical disk 16.

Here, a deviation signal (inclination deviation signal) only in the X direction which is outputted from the fifth light receiving element PSD attributed to the deviation of the spot of the zero-order diffraction beams 19 forms the beautiful sinusoidal waves provided that an object of inspection has the ideal concentric lattice with no eccentricity from the track.

Further, when the optical disk 16 makes a minute inclination $\alpha$ with respect to the spindle shaft 31, on the fifth light receiving element PSD, the deviation with respect to the inclination of $2\alpha$ (= angle $\beta$) is assumed. In this case, the deviation signal only in the X direction on the fifth light receiving element PSD assumes the sinusoidal waves and hence, 1/2 of the angular deviation amplitude can be detected as an inclination quantity (optical tilt) of the spindle shaft 31 and the optical disk 16.

However, in the above-mentioned inspection of the optical tilt, not only in the case that the inclination of the optical disk is present but also in a case that warp, waving or the like is present in the optical disk per se, the surface deflection deviation is detected such that the deviation is overlapped to the optical tilt.

In general, an output signal from the fifth light receiving element PSD contains the optical tilt and the surface deflection deviation quantity of the optical disk and hence, the output signal is separated into an optical tilt component and a surface deflection deviation signal component.

That is, the output signal of the fifth light receiving element PSD is, in general, configured such that the surface deflection deviation signal component having high frequency is added to the optical tilt signal component having sinusoidal waves. Accordingly, by making the output signal from the fifth light receiving element PSD pass through a band pass filter, it is possible to separate the output signal into the inclination deviation signal component and the surface deflection deviation signal component.

Further, since the output signal from the fifth light receiving element PSD contains an inclination quantity of the spindle shaft 31 per se, by measuring the deviation quantity of the spindle shaft per se using a separate technique and perform the separation of signals by subtracting the deviation quantity from the actually measured data, it is possible to inspect the respective deviation quantities of the optical tilt and the vertical run-out of the optical disk. Here, aiming at the enhancement of the linearity of the output signal from the fifth light receiving element PSD, to make the beam receiving quantity of the fifth light receiving element PSD constant, it is preferable to perform a feedback control of the output of the semiconductor laser light source LD1 (see Fig. 2).

(Calculation of optical tilt $\alpha$)

Next, a method for specifically calculating the optical tilt $\alpha$ from the output signal of the fifth light receiving element PSD is explained.

The inspection of the optical tilt $\alpha$ is performed such that by receiving the zero-order diffraction beams 19 using the fifth light receiving element PSD, a distance of incident angle/reflection angle is calculated and the inclination of the optical angle = the optical tilt $\alpha$ is calculated as shown in Fig. 3.

That is, in Fig. 3, the distance dx in the X-axis direction (distance in the Y-axis direction being dy) on the light receiving surface of the fifth light receiving element PSD can be inspected by the fifth light receiving element PSD and hence, the optical tilt $\alpha$ can be calculated by a formula $\alpha = dx/df$.

(Calculation of vertical run-out H)

Next, the method for calculating the vertical run-out H is explained in conjunction with Table 1 and Fig. 4.

Table 1 shows one embodiment of a method in which the optical tilt $\alpha$ is inspected at six points and the detection angles at respective inspection points are set as $\alpha 1$ to $\alpha 6$ and, thereafter, the heights and the cumulative heights deviation (vertical run-out) at respective measuring points are calculated.

Table 1

| surface deflection calculating method | | |
|---|---|---|
| Detection angle of respective measuring points | Heights of respective measuring points | Cumulative height deviation (vertical run-out) |
| $\alpha 1$ | $\Delta h1 (=\Delta c\ \tan\alpha 1)$ | H1 $(=\Delta h1)$ |
| $\alpha 2$ | $\Delta h2 (=\Delta c\ \tan\alpha 2)$ | H2 $(=H1 + \Delta h2)$ |
| $\alpha 3$ | $\Delta h3 (=\Delta c\ \tan\alpha 3)$ | H3 $(=H2 + \Delta h3)$ |
| $\alpha 4$ | $\Delta h4 (=\Delta c\ \tan\alpha 4)$ | H4 $(=H3 + \Delta h4)$ |
| $\alpha 5$ | $\Delta h5 (=\Delta c\ \tan\alpha 5)$ | H5 $(=H4 + \Delta h5)$ |
| $\alpha 6$ | $\Delta h6 (=\Delta c\ \tan\alpha 6)$ | H6 $(=H5 + \Delta h6)$ |

Fig. 4 is a graph in which the vertical run-out H which is calculated based on Table 1 is taken on the axis of abscissas and the inspection point position is taken on the axis of ordinates.

To explain this method in detail, first of all, the optical disk is rotated by one revolution and the optical tilts ($\alpha 1$, $\alpha 2$, $\alpha 3$, ... ) are inspected every fixed interval ($\Delta c$) in the circumferential direction and the deviation quantity $\Delta h$ ($\Delta c$ $\tan\alpha$) of the optical tilt $\alpha$ at every inspection point for every inspection point interval (=$\Delta c$) is calculated. By cumulatively adding the deviation quantity $\Delta h$, the vertical run-outs of respective inspection points are calculated as H1, H2, H3, ... and, thereafter, a surface deflection deviation quantity curve L1 shown in Fig. 4 can be drawn.

Here, with respect to the surface deflection deviation quantity curve L1 shown in Fig. 4, the vertical run-out H uses a measuring start point as the reference.

The vertical run-out is measured in both directions such as the vertical run-out in the radial direction and the vertical run-out in the circumferential direction. That is, the relative positional relationship between the track of the optical disk, that is, the vertical run-outs in the radial direction and the vertical run-outs in the circumferential direction of the track of the optical disk are respectively calculated based on the above-mentioned formula $\Delta h1 (=\Delta c\cdot\tan\alpha)$ and the surface deflection deviation quantity curve shown in Fig. 4 is drawn.

It is unnecessary to measure absolute values of these vertical run-outs and it is preferable to set the relative reference point at "an outermost circumference of the optical disk clamp area" from a viewpoint of facilitating the calculation.

Further, to obtain the acceleration of the surface deflection, the acceleration can be calculated by performing the first-order differential of the optical tilt (angular data).

(Measurement of eccentricity)

Next, the explanation is made with respect to a case in which the eccentricity of the optical disk is measured using the composite optical sensor unit of the present invention.

Here, the eccentricity implies the deviation quantity between the center of rotation of the optical disk and the center of track. Although the optical disk is designed such that the center of rotation of the optical disk and the center of track are aligned with each other, in actual manufacturing, there is a case that in a chucking step for positioning and mounting a media hub at the center of track, the deviation (eccentricity) occurs between the center of track and the center of rotation of the optical disk. Further, there may be also a case that the media hub per se is mounted in a state that the media hub is displaced from the center of optical disk track. These drawbacks appear as the eccentricity of the optical disk.

In the present invention, the eccentricity of the optical disk is calculated by grasping the innermost circumferential position of the optical disk, by grasping the outermost circumferential position of the optical disk, and by measuring the width of the recording portion.

Fig. 5 is a view showing the optical system for measuring the eccentricity by extracting the optical system from Fig. 1 in the present invention.

In Fig. 5, the laser beams which are irradiated from the laser beam source LD1 are made parallel by the collimating lens 11 and pass through the pin hole 12 and are formed into the spot light.

The mirror 13 mounted on the semiconductor method resonance type one-dimensional scanner has a wide angle and repeats the one-dimensional scanning at a high speed. The parallel laser beams in a spot shape which have passed through the pin hole 12 are radiated to the mirror 13. The laser beams pass through the collimating lens 14 and are formed into the strip-like parallel beams having one-dimensional configuration. The laser beams are then bent by 90° by way of the beam splitter 15 and are converted into a circularly light by a quarter-wave plate 25 and are vertically radiated to the surface of the optical disk such that the polarized light is overlapped to the recording portion of the surface of the optical disk 16 which constitutes the obj ect of inspection including the mirror portion 17 radially outwardly from the center of rotation.

The laser beams which are incident on the optical disk are separated into the zero-order diffraction light and a large number of n-order diffraction lights which depend on the interval and the shape of the track which constitutes the diffraction lattice. In this embodiment, the optical system is configured such that out of the n-order diffraction lights, all of the light quantity deviation of first-order diffraction light is received and detected by the second light receiving element PD2.

Here, it is not always necessary to use the first-order diffraction light as the n-order diffraction light which is received and detected. The second-order diffraction light, the third-order diffraction light or the like can be used as the n-order diffraction light which is received and detected depending on the specification of the device.

In the recording portion 18 of the optical disk in which the concentric diffraction lattice is formed, although the first-order diffraction light is received by the second light receiving element PD2, in the mirror portion 17 of the optical disk where the diffraction lattice is not formed, the diffraction phenomenon is not generated and hence, there is no possibility that the first-order diffraction light is received by the second light receiving element PD2.

By detecting the ON/OFF of the reception of first-order diffraction light at the innermost circumferential position and the outermost circumferential position of the track (recording part) of the optical disk using the second light receiving element PD2, it is possible to grasp the innermost circumferential position and the outermost circumferential position of the track of the optical disk. It is also possible to measure the width of the recording portion.

That is, the formation of the track (recording portion) of the optical disk requires an extreme precision. Accordingly, in the present invention, by adopting the track innermost circumferential position and the track outermost circumferential position of the optical disk as the scale reference and by knowing the innermost circumferential position and the outermost circumferential position of the track, it is possible to measure the deviation (eccentricity) between the center of rotation of the spindle and the center of track.

Further, since the width of the recording portion is fixed, when the measured value of the width differs from a given value, the presence of smear on an edge of the recording portion or a flaw on the recording portion is estimated.

Alternatively, the presence of an address mark (a portion where a rectangular mark is present or a portion such as a mirror portion where the diffraction is not generated) which are observed in a DVD-RAM, MO is estimated so that it is possible to prevent to adopt data from this portion.

(Inspection of eccentricity)

Next, a method which inspects an amount of eccentricity of the center of the concentric diffraction lattice (track) of the optical disk from a spindle axis using the composite optical sensor unit of the present invention is explained. In this embodiment, among the n-order diffraction lights, using the first-order diffraction light, the ON/OFF of the diffraction light attributed to the eccentricity from the spindle axis 31 is measured using the photo detector.

That is, as shown in Fig. 7, the optical disk is rotated by one turn and the ON/OFF position of reception of the first-order diffraction light is detected by the second light receiving element PD2. When the eccentricity is present, the eccentricity is observed as a sine curve. That is, the ON positions are plotted to form an eccentricity Sine curve which is indicated based on the recording-portion innermost circumferential position data NL and the OFF positions are plotted to form an eccentricity Sine curve which is indicated based on the recording-portion outermost position data GL.

Based on either one of the eccentricity sine curves, the optical disk eccentricity of an object of inspection is calculated. A +PP value on the eccentricity Sine curve is a maximum eccentricity value which projects in the radial direction fromthe spindle axis 31. That is, the maximum measured position (+PP) of the width of the recording portion assumes the maximum eccentricity measured position. Accordingly, by grasping the maximum measured position (+PP) of the width of the recording portion, it is possible to perform the correction of measurement of positions distributed around one turn of the optical disk. The specific calculation is performed as follows.

That is, the +PP value shown in Fig. 7 assumes the maximum radius length of the outermost circumference of the recording portion. Accordingly, assuming a case that there is no eccentricity, the non-eccentric position assumes an average value and the waveform becomes completely horizontal.

By continuously detecting the width of the recording portion 18 of the optical disk, when the detected width is excessively wide or narrow exceeding limits with respect to the recording width, as shown in an upper portion of Fig. 8, this is considered as some locally abnormal data (for example, mixing of local foreignmatters, defects, address mark) which is present in the edge of the recording portion and this data is not adopted.

Further, in an address mark portion (portion having the characteristics substantially equivalent to those of the mirror portion) which is observed in a DVD-RAM, MO or the like, the diffraction is not generated. Accordingly, to enable the accurate measurement of the eccentricity even when a large number of address marks are present in the recording portion, the address marks at positions other than the innermost and outermost circumferential positions of the recording portion (present in the recording portion) are set at a non-inspection area as shown in Fig. 6 and, thereafter, the width of the recording portion is continuously measured, compared and corrected whereby the eccentricity between the center of rotation and the center of track can be measured.

Here, the acceleration of eccentricity can be calculated by performing the second-order differential with respect to the measured eccentricity data.

(Inspection of defects in appearance)

Next, the inspection of defects in appearance of the optical disk which are present over the whole surface of the recording portion including the mirror portion is explained. Defects in appearance implies inside foreign matters present in the optical disk (air bubbles, inclusions and the like), defects in the recording layer (pinholes, flaws, oil smear, irregular molding and the like) , surface defects (surface flaws, foreign matters attached to surface and the like) or the like. In the present invention, the whole surface of the inspection portion is scanned by the laser beams and change of light quantity and deviation of time of both of zero-order diffraction light (positive reflection light) and the n-order diffraction light are compared so as to discriminate and detect the defects.

To grasp the presence and kinds of defects by detecting these items, the inspection is performed in the following manner. When the defect in appearance is present in the optical disk, the positive reflection light which is the zero-order diffraction light or the n-order diffraction light is remarkably reduced due to the presence of the defect and the defect appears as the change of quantity of light.

In the present invention, this change of quantity of light is detected using the fifth light receiving element PSD, the first light receiving element PS1 and the second light receiving element PS2 and, thereafter, the position and a quantity of temporal deviation are analyzed so as to inspect the presence or non-presence of defects, shape, position and classification of defects in appearance.

(measurement of depth of defects in appearance)

First of all, a method for measuring the depth position of the defect present in the optical disk 16 is explained in conjunction with Fig. 9.

When the defect in appearance is present in the optical disk 16, the positive reflection light of zero-order diffraction light or the n-order diffraction light remarkably reduce light thereof due to the defect and hence, the presence of the defect appears as the change of quantity of light.

In this case, by grasping the time simultaneity of the change of quantity of light of both of the positive reflection light of zero-order diffraction light and the n-order diffraction light, it is possible to grasp the depth position of the defect. That is, by observing the time difference (time delay) depending on the scanning position of the laser beams, it is possible to specify the depth positions where the defects are present.

This point is explained in more detail in conjunction with Fig. 9.

When the defects are not present in the optical disk 16 (examples at positions (1) and (6) ) , the laser beams are reflected on the reflection surface of the optical disk and a fixed quantity of light are received by all of the fifth light receiving element PSD, the first light receiving element PD1 and the second light receiving element PD2 at the zero-order diffraction light side and the n-order diffraction light side so that it is confirmed that the optical disk 16 is in a non-defective state.

On the other hand, when the defects are present in the optical disk 16 (example at position (2)), the reflection light of the zero-order diffraction light is reflected and a fixed quantity of light equal to a quantity of light at the non-defective time is received by the fifth light receiving element PSD and the first light receiving element PD1. However, at the first-order diffraction light side, an optical path is blocked by the inside foreign matter 101 and hence, a light quantity of the second light receiving element PD2 is reduced so that the presence of defects in the optical disk 16 can be confirmed.

Further, in case that a defect of another mode is present in the optical disk 16 (example at the position (3)), when laser beams are irradiated, an incident light is blocked by the inside foreign matters 101, 102 so that the light is reduced with respect to all of the fifth light receiving element PSD, the first light receiving element PD1 and the second light receiving element PD2.

That is, by measuring the time difference L1 between (1) and (2), the height distance L1' from the reflection surface of the optical disk can be calculated.

Further, when the defects of another mode are also present in the optical disk 16 (example at position (4) ), the reflection light of the zero-order diffraction light is reflected and a fixed quantity of light equal to a quantity of light at the time that the optical disk 16 is non-defective is received by the fifth light receiving element PSD and the first light receiving element PD1. However, at the first-order diffraction light side, an optical path is blocked by the inside foreign matter 102 and hence, a light quantity of the second light receiving element PD2 is reduced so that the presence of defects in the optical disk 16 can be confirmed.

Further, in case that a defect of another mode is present in the optical disk 16 (example at the position (5)), when the laser beams reach the optical disk 16, an incident light is blocked by the inside foreign matter 101 so that the light is reduced with respect to all of the fifth light receiving element PSD, the first light receiving element PD1 and the second light receiving element PD2. That is, by measuring the time difference L2 between (4) and (5), the height distance L2' from the reflection surface of the optical disk can be calculated.

In this manner, by combining the positive reflection light of the zero-order diffraction light and the n-order diffraction light, in the detection of defects of the recording portion of the optical disk in which the diffraction light is generated, it is possible to specify not only the presence and non-presence of the defects but also the depth positions where the defects are present.

Here, as shown in Fig. 10, only with the provision of the sensor at the second light receiving element PD2 side, a non-inspection region (PD2 non-sensing region) is formed in the depth detection of the defects and hence, to solve this drawback, it is preferable to provide a fourth light receiving element PD4 having a following constitution.

This non-inspection region is a minute portion starting from the innermost circumference. However, when the defect depth positions of the whole recording portion are accurately specified without ignoring the non-inspection region, as shown in Fig. 10, the fourth light receiving element PD4 which constitutes an innermost diameter auxiliary sensor and a collimating lens 5 are provided and they are used in combination with the composite optical sensor unit of the present invention. Due to such a constitution, it is possible to perform the appearance defect inspection of all recording portion and the specifying of defect depth positions.

The reception of light by the fourth light receiving element PD4 is performed by utilizing the following nature of the laser beams. That is, the laser beams which are incident vertically or perpendicular to the planar surface of the optical disk are formed into the positive reflection light of the zero-order diffraction light and the n-order diffraction light and are reflected on the reflection film, wherein the n-order diffraction light is reflected under the same conditions not only in the radial outward direction of the optical disk but also in the track center direction.

(Detection and measurement of defects in appearance)

To grasp the classification of types of defects and features of shapes of defects and the like, the whole surface of the object of inspection is scanned by laser beams and, thereafter, the change of quantity of light of the positive reflection light in the zero-order diffraction light is finely grasped and visualized. Then, based on the size, the analysis of characteristics of change of quantity of light, characteristics of shape and the like, the defects can be extracted and classified.

At the same time, to grasp the state of the presence of the defects, the change of quantity of light in the previously-mentioned n-order diffraction light is finely grasped, is visualized, is compared with that of a case in which no defect is present and is reviewed whereby the time deviation is measured.

In this embodiment of the present invention, the second-order PSD which constitutes the fifth light receiving element PSD is currently at a low speed and hence, the first light receiving element PD1 is used as means which can detect the change of quantity of light of positive reflection light in the zero-order diffraction light for exhibiting high-speed performance together with the second-order PSD which constitutes the fifth light receiving element. However, when the second position sensitive detector PSD can perform sampling with a clock of equal to or more than 100 Mhz, auxiliary means for the photo detector PD1 is not particularly necessary.

(Classification of types of defects)

When the reduction of diffraction light is caught by the first light receiving element PD1, the fifth light receiving element PSD and the second light receiving element PD3, and is visualized and, thereafter, it is judged that the defects are present, based on the depth positions of the defects, as shown in Fig. 11, the defects are largely classified into three defects consisting of the internal foreign matters, the defects of the recording layer and the surface defects.

That is, assuming the thickness of the optical disk as L, the defects are judged and classified as follows. That is, when the calculated defect depth Ln is Ln ≈ 0, it is judged that the defects are the defects of the surface layer. When the calculated defect depth Ln is Ln ≠ 0 and Ln ≠ L, it is judged that the defects are the defects of the internal defects. When the calculated defect depth is Ln ≈ L, it is judged that the defects are the defects of the surface defects.

After classifying these three types of defects in the above-mentioned manner, the types of defects are specified based on the characteristics of the obtained image information. Due to this specifying of types of defects, it is possible to find out the main cause of the generation of the defects in the fabrication process of the optical disk.

Further, the detailed classification of the defects can be'put into practice by comparing the obtained image information with the preliminarily investigated and registered defect data base and by making the judgement based on the comparison.

Table 2 collectively shows the types of defects.

Table 2

| Classification and types of defects in appearance | | |
| --- | --- | --- |
| defects | example of types of defects | explanation |
| inside foreign matter | inner inclusions | particularly inner inclusions at the time of vapor deposition |
| | bubbles | particularly bubbles at the time of laminating a substrate |
| surface defects | surface foreign material | particularly surface foreign matters at the time of coating |
| | surface flaws | flaws on the surface |
| recording layer defects | pin holes | pin holes in recording layer made of aluminum, gold or the like |
| | flaws | flaws on recording layer made of aluminum, gold or the like |
| | oil smear | oil smear on recording layer made of aluminum, gold or the like |
| | abnormal molding | abnormal molding of recording layer |

(Measurement of reflectivity)

Next, by continuously measuring the fine change of the quantity of light of the zero-order diffraction light (positive reflection light) and/or the n-order diffraction light, the reflectivity of the whole surface of the recording portion including the mirror portion of the optical disk can be inspected.

In Fig. 1, with respect to the laser beams irradiated from the semiconductor laser light source LD1, the intensity of quantity of light thereof is monitored by the third light receiving element PD3 which constitutes the semiconductor laser light quantity monitor. Since there are some semiconductor laser diodes into which a photo detector is incorporated for inspecting the intensity of laser output, it is possible to use such a photo detector as a monitor for intensity of light quantity. Alternatively, it is possible to use another independent photo detector which is arranged outside the laser diode rather than inside the laser diode.

In this embodiment of the present invention, with respect to the zero-order diffraction light, the intensity of the light quantity is inspected by the photo director which constitutes the first light receiving element PD1 or the two-dimensional PSD which constitutes the fifth light receiving element'PSD, while with respect to the n-order diffraction light, the intensity of the light quantity is inspected by the photo director which constitutes the second light receiving element PD2.

The reflectivity r of the optical disk is calculated using a following equation (2) in the embodiment of the present invention.

$$r = n1 \cdot p1/p0 + n2 \cdot p2/p0 + 3 \tag{2}$$

Here, p1 is an inspected intensity of the zero-order diffraction light, p2 is an inspected intensity of the n-order diffraction light, p0 is the intensity of laser output, and n1, n2, n3 are intrinsic constants which materials of the optical disk and the optical system have. In this manner, it is possible to measure the total reflectivity of optical disk including the zero-order diffraction light and the n-order reflection light.

Although the quantity of light can be inspected by the two-dimensional position sensitive detector, at this point of time, the sampling speed of the detector is approximately 100 khz at a maximum and hence, the sampling speed is not a high speed.

To the contrary, the photo detector can perform the sampling at the extremely high speed equal to or more than 100 Mhz so that the photo detector can exhibit the high speed performance. Accordingly, it is extremely effective to install the photo detector as the auxiliary means.

However, when the low-speed sampling is sufficient, it is not indispensable to install the photo detector which constitutes the first light receiving element PD1. That is, the inspection of quantity of light can be performed only by installing the two-dimensional PSD which constitutes the fifth light receiving element PSD and hence, it is possible to perform all items of the appearance inspection.

Here, when the two-dimensional position sensitive detector is capable of performing the sampling of equal to or more than 100 Mhz in future, the installation of the photo detector which constitutes the first light receiving element PD1 will become no more indispensable in the same manner.

(Optical disk inspection device)

The optical disk inspection device in which the composite optical sensor unit of the present invention is incorporated is explained. Fig. 13 shows one embodiment of the whole constitution of the optical disk inspection device of the present invention and signal processing which is performed with respect to the device.

(Buffered A/D converter)

The composite optical sensor unit A shown in Fig. 13 corresponds to a main constituent portion of the composite optical sensor unit shown in Fig. 1.

In Fig. 13, to a buffered A/D converter 51, X position data and Y position data of light receiving laser spots and light receiving quantity data are inputted from the two-dimensional PSD which constitutes the fifth light receiving element PSD. At the same time, to the buffered A/D converter 51, light receiving quantity data of a semiconductor laser light quantity monitor PD3 which is incorporated into a semiconductor laser beam source LD1 and which monitors a light quantity of the semiconductor laser beam source LD1 per se is inputted.

Further, in this embodiment, the buffered A/D converter 51 is installed for allowing analogue inputting of respective sensors which do not specifically require high-speed processing and hence, the buffered A/D converter 51 includes a data buffer of 64 Mbyte for performing 128 sampling by 1 scanning at a clock of 4.1 Mhz.

Further, in this embodiment, to achieve the sampling synchronism, the buffered A/D converter 51 performs the 1/16 frequency division of the clock of 65.5Mhz from a scanner control circuit so as to generate the 4.1Mhz clock.

Then, the buffered A/D converter 51 averages data of light receiving quantity fromthe sampled fifth light receiving element PSD and the light quantity outputting of the semiconductor laser beam source LD1 is subjected to the feedback control by way of a laser control circuit 53 to obtain a fixed light receiving quantity. Here, to reduce a load applied to a control CPU 60, it is preferable that the buffered A/D converter 51 adopts a buffered method so that the converter 51 is capable of obtaining ability to perform at 10Mhz sampling at maximum.

(High-speed buffered A/D converter)

The light quantity data from the first light receiving element PD1 and the second light receiving element PD2 are inputted to the high-speed buffered A/D converter 52 as analogue signals.

In this embodiment, to use the high-speed buffered A/D converter 52 in the appearance inspection, it is preferable for the converter 52 to set a sampling rate to 65.5Mhz and to include a buffer of 64Mbyte in which data of 2048 sampling per 1 scanning is incorporated.

Further, in this embodiment, to take the sampling synchronism, it is preferable for the high-speed buffered A/D converter 52 to use a clock of 65.5Mhz supplied from a scanner control circuit 57. Further, to reduce a load applied to a control CPU 60, it is preferable that the high-speed buffered A/D converter 52 adopts a buffered system to have an ability that the converter 52 can be operated with a clock having 100 Mhz at a maximum in sampling.

(Laser outputting control)

It is preferable that the semiconductor laser LD1 is of a type in which a semiconductor laser light quantity monitor PD3 for monitoring an output which is capable of outputting approximately 5mW is incorporated. In this embodiment, since the track pitch differs depending on the optical disk which becomes an object of inspection, the semiconductor laser LD1 has the mechanism or the structure which is capable of adjusting the light receiving portions (angles) of the first-order diffraction light. It is also preferable that the semiconductor laser LD1 adopts the structure which can exchange the laser diode per se of the semiconductor laser beam source LD1.

Further, to enhance the linearity of the two-dimensional PSD, for the purpose of performing a feedback control to make the light receiving quantity on the two dimensional PSD constant, it is also preferable to provide a laser control circuit 53.

Here, in this embodiment, the light quantity data of the semiconductor laser light quantity monitor PD3 which is incorporated into the laser diode per se of the semiconductor laser LD1 is configured such that the laser beam output of the semiconductor laser LD1 is directly inspected at the time of inspecting the reflectivity of the optical disk so that the monitoring of a case in which an abnormal outputting is generated due to the deterioration of the semiconductor laser LD1 can be performed simultaneously.

(Process controller)

In this embodiment, the process controller 54 plays roles such as the transaction of signals with the scanner control circuit 57 of the semiconductor resonance type one-dimensional scanner mirror 13, the centering control (starting/releasing of centering, the transaction of signals with an automatic centering control circuit) and the like of a spindle shaft 31 provided with an automatic centering mechanism.

Further, the process controller 54 also plays a role of monitoring the status of the control and the operation of the whole inspection device and outputting control signals to a handling robot which is installed outside.

(Servo motor controller)

In this embodiment, the servomotor controller 59 performs a rotational control of a spindle motor 55 (motor driver).

Further, the servo motor controller 59 reads pulses from an encoder mounted on the spindle motor 55 and performs monitoring of position of rotational angles simultaneously (an encoder control circuit 56).

(Control of semiconductor resonance type mirror)

In this embodiment, a scanner control circuit 57 automatically follows even when the resonance frequency is finely changed due to an ambient temperature or the like, detects also a width of an amplitude and performs a feedback control to hold the width of amplitude at a fixed value, while a leveling clock generating circuit 58 generates basic frequency of 65.5 Mhz including sweep signals which divide a scanning region at an equal interval.

Further, the scanner control circuit 57 transmits 65.5Mhz from the leveling clock generating circuit 58 as an A/D converter sampling clock, generates a clock of 262Mhz which is four times as large as 65.5Mhz as an internal clock and uses this clock as a basic clock for measuring eccentricity.

(System control CPU)

In this embodiment, a system control CPU 60 controls the whole optical disk inspection device, and includes a hard disk drive HDD for holding a program and storing data, a CD-ROM, an FDD for setting programs, a net controller for connection with a host CPU and the like.

For facilitating the operation of the system control CPU 60, it is also preferable to attach a CRT display device and a printer device for reporting defects as consoles.

(Hardware for measuring eccentricity)

Fig. 14 is a block diagram showing one embodiment of a measuring edge sensor circuit which is incorporated into the optical disk inspection device of the present invention for measuring eccentricity. As shown in Fig. 14, in this embodiment, the circuit is constituted of hardware for increasing the accuracy of eccentricity measurement.

In Fig. 14, a scanning position counter 61 is, after being reset at an origin of scanning of the mirror 13 (see Fig. 1) set to a high speed counter of 12 bits which is driven by 262Mhz which is four times as large as 65.5Mhz.

Further, a mask generating circuit 62 sets detection start positions for detecting an inner recording edge and an outer recording edge and also sets detection widths of the scanning position counter 61.

Here, the reason for setting the detection start points for detecting the inner recording edge and the outer recording edge and for setting the detection widths is as follows. That is, there may be a case that the edge is detected at an unexpected position due to address marks or foreign matters in the recording portion and hence, such setting is performed to generate gate signals for giving a detection admission "look for an edge position around this area and with this width". To be more specific, they are comprised of an inspection area (inside) and an inspection area (outside) shown in Fig. 6.

When the scanning position counter 61 reaches the set position, the scanning position counter 61 transmits a +edge enable signal 68 and -edge enable signal 69 corresponding to a detected width to a clock synchronizing circuit 63. To be more specific, the enable signals and the detection admission signal are outputted from the mask generating circuit.

In the same manner, when the scanning position counter 61 is arranged in the detection area (inside) or the inspection area (outside) shown in Fig. 6, the signal is outputted. That is, an inside position resister 64 sets an inside recording edge detection start position from the system control CPU 60 side by way of the process controller 54. In the same manner, an outside position resister 65 sets an outside recording edge detection start position from the system control CPU 60 side by way of the process controller 54, and the detection width resister 66 sets a width (a distance) formonitoring the detection fromthe inside/outside recording edge detection start positions fromthe system control CPU 60 side by way of the process controller 54.

The signal from the second light receiving element PD2 passes through a comparator and is converted into binary values and enters the clock synchronizing circuit 63. In the clock synchronizing circuit 63, when the signal from the second light receiving element PD2 is changed, the signal is synchronized with a four multiplied clock, and when the inside edge is detected (that is, the diffraction light is turned on) during a +edge enable period, a sample clock is transmitted to the inside recording edge resister.

Here, the +edge enable period implies a period during which the +enable signal and the detection admission signal are transmitted from the mask generating circuit, that is, a period when the scanning position counter 61 is in the detection area (inside) shown in Fig. 6.

When the outside edge is detected (that is, the diffraction light is turned off) during the -edge enable period, a sample clock is transmitted to the outside edge resister in the same manner. Here, the -edge enable period implies a period during which the -enable signal and the detection admission signal are transmitted from the mask generating circuit, that is, a period when the scanning position counter 61 is in the detection area (outside) shown in Fig. 6.

In response to these sample clocks, a content of the scanning position counter 61 is recorded in the inside edge register and the outside edge resister, and the system control CPU 60 can read the contents of both edge resisters through the process controller 54.

Next, the explanation is made using a flow chart shown in Fig. 15 to Fig. 22 for continuously inspecting the optical disk using the optical disk inspection device of the present invention. In this embodiment, the explanation is made with respect to a case in which the measurement is performed such that the divided sampling number is 2048 points at the radius side and 14400 points in the circumferential direction as one embodiment.

Fig. 15 shows a main flow of a case in which the optical disk is continuously inspected.

In Fig. 15, when the measuring starts ((1)), the optical disk inspection device of the present invention is automatically operated in accordance with the following flow.

- Data is sampled (#1).
- The recording portion edge data is corrected based on width data (#2).
- The radial-direction eccentricity / radial acceleration is calculated (#3).
- The optical tilt is calculated (#4).
- The vertical run-out/vertical acceleration is calculated (#5).
- The inspection of the reflectivity and the defects in appearance is performed (#6).
- The result is judged (#7).

Using Fig. 16, the steps for sampling the data in #1 shown in Fig. 15 are explained in more detail in order of steps.

First of all, after completion of (1), following steps are performed.

- The sampling of data is started (S1).
- The spindle shaft 31 is activated, the scanner 13 is activated and the line counter is set to 0 (S2):
- The sample counter is set to 0 (S3).
- Then, it is confirmed whether the scanner mirror 13 is at the scanning origin position or not (S4).
- When the scanner mirror 13 is not at the origin position, the scanner mirror 13 is set to the scanning origin position. When the scanner mirror 13 is at the origin position, the processing advances to a next step.
- Fetching of data is performed in synchronism with clocks and the data are stored (S5).
- The data from the fifth light receiving element PSD and the third light receiving element PD3 are stored once every eight times. The data from the first light receiving element PD1 and the data from the second light receiving element PD2 are stored every time. The sample counter is set to +1.
- It is judged whether the sample counter reaches 2048 points or not (S6).

- When the sample counter has not yet reached 2048 points, the processing returns to step S4 and the data is fetched until the sample counter reaches 2048 points. When the sample counter reaches 2048 points, the processing advances to a next step.
- The line counter is set to +1.
- The data of the inside and outside recording edge registers are read (that is, the innermost circumferential position and the outermost circumferential position of the recording portion are grasped) and the data are stored (S8).
- The calculation "the outside record edge - inside recording edge = width data" is performed and the width data which is the result of calculation is stored (S9).
- It is judged whether the line counter reaches 14400 points or not (S10). When it is judged that the line counter has not yet reached 14400 points, the processing returns to step S2 and the sampling is continued. When it is judged that the line counter has reached 14400 points, the spindle and the scanner are stopped (S11) and the data sampling is finished (S12).
- Thereafter, the processing advances to (2).

In this embodiment, by activating the spindle shaft 31 and the scanner mirror 13, the data sampling is performed such that data are sampled at 2048 points from the first light receiving element PD1 and the second light receiving element PD2 and data from the fifth light receiving element PSD are sampled at 256 points (since the data are sampled once every 8 times, the point becomes 1/8 of 2048).

Further, reading of edge registers which store the inside and outside edge positions of the optical disk recording portion is performed.

In the same manner, the above-mentioned operation is repeated by dividing the total circumference 360° in the circumferential direction of the optical disk (every 360/14400°, that is, 14400 lines) and the data are fetched. That is, the edge register is comprised of a high-speed counter which constitutes a hardware which is driven at a clock four times as fast as the sample clock and a register. The edge register compares the innermost and outermost circumferential positions of the recording portion based on the data from the second light receiving element PD2, performs strobing, scanning, and stores the innermost and outermost circumferential positions of recording portion of lines (radial direction).

Steps for correcting the total circumferential recording edge (recording portion positions) data obtained from the width data of #2 shown in Fig. 15 are explained in detail in conjunction with Fig. 17.

Steps advance from (2) in Fig. 16 in accordance with following steps.

- The correction is started (S13).
- An interpolation approximation calculation is performed on the recording portion width data of 14400 lines using sine curves. The correction of influences of local defects, address marks and the like is performed (S14).
- The maximum value (PP value) of the recording portion width data of 14400 lines is searched and is stored as the width PP value (S15).
- The correction of recording portion inside edge data of 14400 lines is performed.
- The calculation of the inside recording edge data + (width PP value - width data) is performed and the result is stored again (S16).
- The correction of recording portion outside edge data of 14400 lines is performed. The calculation of the outside recording edge data + (width PP value - width data) is performed.
- The result is stored again (S17).
- The correction is finished (S18).
- Thereafter, the processing advances to (3).

Steps for calculating the radial eccentricity/eccentricity acceleration based on the full-circumferential inner circumference/outer circumference edge data of #3 shown in Fig. 15 are described in detail in conjunction with Fig. 18.

Steps advance from (3) in Fig. 17 in accordance with following steps.

- The eccentricity calculation is started (S19).
- An interpolation approximation calculation is performed on the inner circumference recording edge data of 14400 lines using sine curves. The correction of influences of local defects, address marks and the like is performed.
- An interpolation approximation calculation is performed on the outer circumference recording edge data of 14400 lines using sine curves. The correction of influences of local defects, address marks and the like is performed (S20).
- The maximum value (PP value) of the inner circumference recording edge data of 14400 lines is searched and is stored as the inner circumference + PP value (S21).
- The minimum value (PP value) of the inner circumference recording edge data of 14400 lines is searched and is stored as the inner circumference - PP value (S22).

- The calculation of (inner circumference + PP value) - (inner circumference - PP value)/2 = inside eccentricity is performed (S23).
- The maximum value (PP value) of the outer circumference recording edge data of 14400 lines is searched and is stored as the outer circumference + PP value (S24).
- The minimum value (PP value) of the outer circumference recording edge data of 14400 lines is searched and is stored as the outer circumference - PP value (S25).
- The calculation of (outer circumference + PP value) - (outer circumference - PP value)/2 = outer circumference eccentricity is performed (S26).
- The calculation of (inner circumference eccentricity + outer circumference eccentricity)/2 = work eccentricity is performed (S27).
- The eccentricity acceleration is calculated by conducting the two-order differential with respect to the eccentricity (distance) data (S28).
- The similar operations or calculations are performed with respect to the 1 circle, that is, 360° based on the inner circumference recording edge and the outer circumference recording edge and, when necessary, they are graphically plotted (making drawings) (S29).
- The calculation of eccentricity is finished (S30).
- Thereafter, the processing advances to (4).

Steps for calculating the optical tilt of #4 shown in Fig. 15 are described in detail in conjunction with Fig. 19. Steps advance from (4) in Fig. 18 in accordance with following steps.

- The calculation of the optical tilt is started (S31).
- The processing counter is set to 0 (S32).
- Out of data of the total circumference 14400 lines, 8 lines are averaged and is extracted as 1 line (S33).
- The $\beta$ angle and the $\alpha$ angle (optical tilt) are calculated from the focal length f based on the data of the fifth light receiving element PSD and dx(dy) data of 256 points in 1 line (S34). The processing counter is set to +1 (S35).
- When the processing counter reaches 1800, the processing advances to next step (S36). When the processing counter does not reach 1800, the above operations are repeated until the processing counter reaches 1800.
- All data of the $\beta$ angle and the $\alpha$ angle (optical tilts) are graphically plotted (drawn) in the circumferential direction and the radial direction when necessary (S37).
- The calculation of the optical tilt is finished (S38).
- Thereafter, the processing advances to (5).

Here, averaging of sum of 8 lines implies 1/8 of 14400 division of the full circumference.
Steps for calculating the vertical run-out/vertical acceleration of #5 shown in Fig. 15 are described in detail in conjunction with Fig. 20.
Steps advance from (5) in Fig. 19 in accordance with following steps.

- The calculation of the vertical run-out/vertical acceleration is started (S39).
- First of all, the processing in the radial direction is performed. The processing counter is set to 0 (S40).
- The deviation in height of respective inspection points is calculated as $\Delta h1 = \Delta c \cdot \tan\alpha$ based on the optical tilt $\alpha1$ and 256 data for 1 line (S41).
- The vertical acceleration in the radial direction is calculated by conducting one-order differential of the $\alpha$ angle data based on 256 data for 1 line with respect to the optical tilt $\alpha$ (S42).
- The cumulative deviation in height in the radial direction (vertical run-out in the radial direction) is calculated (S43).
- The processing counter is set to +1 (S44).
- When the processing counter does not reach 1800, the above operations are repeated until the processing counter reaches 1800 (S45). When the processing counter reaches 1800, the processing advances to the next step. All data in the radial direction are graphically plotted (drawn) at arbitrary positions in the radial directions when necessary (S46).

Then, the processing in the circumferential direction is performed.
The processing counter is set to 0 (S47).

- The deviation in height of respective inspection points are calculated as $\Delta h1 = \Delta c \cdot \tan\alpha$ based on the optical angle $\alpha1$ and 1800 data in the circumferential direction at the same position (S48).
- The vertical acceleration in the circumferential direction is calculated by conducting the one-order differential of $\alpha$ angle data based on the optical tilt $\alpha$ and 1800 data in the circumferential direction at the same position (S49).

- The cumulative deviation in height in the circumferential direction (vertical run-out in the circumferential direction) is calculated (S50).
- The processing counter is set to +1 (S51).
- When the processing counter does not reach 256, the above-mentioned operations are repeated until the processing counter reaches 256. When the processing counter reaches 256, the processing advances to the next step (S52).
- All data in the circumferential direction are graphically plotted (drawn) at arbitrary circumferential positions when necessary (S53). The calculation of the vertical run-out/acceleration is finished (S54).
- Thereafter, the processing advances to (6).

Steps for calculating the reflectivity, the appearance image developing/appearance defect inspection of #6 shown in Fig. 15 are described in detail in conjunction with Fig. 21.

Steps advance from (6) in Fig. 20 in accordance with following steps.

- The reflectivity/image developing/defect inspection is started (S55).

First of all, the reflectivity is measured.

- The 2048 points data in the radial direction obtained by the first light receiving element PD1 are developed two-dimensionally at the circumferential 14400 lines so as to form an appearance gray image of zero-order light (S56).
- The 2048 points data in the radial direction obtained by the second light receiving element PD2 are developed two-dimensionally at the circumferential 14400 lines so as to form an appearance gray scale image of zero-order light (S57).
- The 256 points data in the radial direction obtained by the third light receiving element PD3 are developed two-dimensionally at the circumferential 14400 lines so as to form data corresponding to the output of laser beams (S58).
- The two-dimensional developing data of the step S47 at 8 points in the circumferential direction are added to form the $8 \times 8$ averaged data, and the laser output data at respective positions in a 256 points $\times$ 1800 points plane is set to p0 (S59) .
- The two-dimensional developing data of the step S45 and step S46 are added at 8 points in the radial direction and at 8 points in the circumferential direction to formthe $8 \times 8$ averaged data, and the laser output data at respective positions in a 256 points $\times$ 1800 points plane are set to p1, p2 (S60).
- The reflectivity at each point of $256 \times 1800$ is calculated as follows.
- reflectivity = n1 ·p1/p0 + n2 ·p2/p0 + n3 (S61)

Here, n1, n2, n3 are intrinsic constants which the material of the optical disk or an the optical system has.

Next, the inspection of defects in appearance is performed.

- In the zero-order appearance gray image picture which is developed two-dimensionally, portions which are below the threshold value are turned into a retrieval binary picture and the set processing of particles is performed (S62).
- In the first-order appearance gray image picture which is developed two-dimensionally, portions which are below the threshold value are turned into a retrieval binary picture and the set processing of particles is performed (S63).
- When the set of particles (area of defects) in the zero-order light binary image exceeds a predetermined value, it is judged that there exists the appearance defects (S64).
- When the defective area does not exceed the predetermined value, it is judged that there is no defect and the processing returns to the step S54 again. When the defective area exceeds the predetermined value, it is judged that there is a defect (S65).
- The discovered defect positions in the zero-order light and the discovered defect positions in the first-order light binary image are compared in the radial direction (scanning direction), the time differences at the positions are calculated and compared, the depth positions of the discovered zero-order light defects are judged, and the defects are classified (S66) .
- The reflectivity/image developing/defect inspection are finished (S67). Thereafter, the processing advances to (7).

Here, the reflectivity of the surface of the optical disk is recalculated by converting the two-dimensional data of 2048 x 14400 into the average data of $8 \times 8$ and is expressed as the two-dimensional data of $256 \times 1800$.

The steps for judging the result of #7 shown in Fig. 15 are explained in detail using Fig. 22. The processing advances in accordance with following steps after (7) in Fig. 21.

- The judgment of result is started (S68).
- It is judged whether the eccentricity exceeds the predetermined value or not (S69).
- When the eccentricity exceeds the predetermined value, a report that there exists an eccentricity defect is made (S70).
- When the eccentricity does not exceed the predetermined value, the processing advances to the next step.
- It is judged whether the optical tilting angle $\alpha$ exceeds the predetermined value or not (S71).
- When the optical tilting angle $\alpha$ exceeds the predetermined value, a report that there exists a tilting defect is made (S72).
- When the optical tilting angle $\alpha$ does not exceed the predetermined value, the processing advances to the next step.
- It is judged whether the vertical run-out in the radial direction or the circumferential direction exceeds the predetermined value or not (S73).
- When the vertical run-out in the radial direction or the circumferential direction exceeds the predetermined value, a report that a surface deflection defect exists is made (S74).
- When the vertical run-out in the radial direction or the circumferential direction does not exceed the predetermined value, the processing advances to a next step.
- It is judged whether the vertical acceleration exceeds the predetermined value or not (S75).
- When the vertical acceleration exceeds the predetermined value, a report that there exists a vertical acceleration defect is made (S76).
- When the vertical acceleration does not exceed the predetermined value, the processing advances to a next step.
- It is judged whether the reflectivity exceeds the predetermined value or not (S77).
- When the reflectivity exceeds the predetermined value, a report that there exists a reflectivity defect is made (S78).
- When the reflectivity does not exceed the predetermined value, the processing advances to a next step.
- It is judged whether the appearance defect exceeds the predetermined value or not (S79).
- When the appearance defect exceeds the predetermined value, a report that there exists appearance defect is made and the size, the position and the depth of the defect are specified and the defect is classified (S80). The judgment of result is finished (S81).

(Embodiment)

Next, one embodiment of the optical disk inspection device which uses the composite optical sensor unit of the present invention is explained in conjunction with Fig. 12. In this embodiment, by considering the inspection resolution, the laser spot beams are set to have the diameter of $\phi$50 $\mu$m and the detection inspection ability is set to approximately $\phi$15 $\mu$m, which is approximately 1/4 of $\phi$50 $\mu$m.

To exhibit the fast performance, the resonance type one-dimensional scanner mirror of the semiconductor type is mounted as the scanner mirror 13 such that the scanner mirror 13 can perform the reciprocating scanning of a deflection angle $\pm$ 20° at 16 Khz and 62.5 $\mu$seconds. Since the reciprocating scanning is performed, the 1 inspection scanning is set to 62.5 $\mu$seconds/2 = 31.3 $\mu$seconds.

With respect to the inspection visual field, the 51.2mm width including the mirror portion of the optical disk of $\phi$120mm which constitutes an object of inspection is set to 2048 resolution and 1 pixel is set to 25$\mu$m, and the sampling rate is set to 65.5Mhz.

The sampling rate according to the two-dimensional position sensitive detector which constitutes the fifth light receiving element PSD is set to 65.5Mhz/16 = 4.1Mhz and 128 resolution. The resolution in the circumferential direction is also set to 25$\mu$m in the outermost circumference of the optical disk having the diameter of $\phi$120mm and is finely divided into 14400 divisions by a division angle of 0.025°.

Further, an automatic centering mechanism is mounted on the spindle shaft 31 thus constituting a spindle structure in which a centering error with respect to the center of rotation of the optical disk is set within 2$\mu$m. As a result, the fast tact within 1 second can be realized as follows.

- automatic centering time: 0.15 second
- spindle fixing time: 0.1 second
- motor accelerating time: 0.1 second
- actual inspection scanning time: 0.45 second
- motor decelerating time

automatic centering releasing and spindle fixing releasing: 0.15 second
Total: 0.95 seconds $\approx$ within 1 second

In this manner, according to this embodiment, with respect to the systematic inspection tact time, all surfaces/all items inspection can be finished within 1 second by taking the enhancement of productivity into consideration.

Industrial Applicability

Although the individual inspections are individually performed at individual stages, using the composite optical sensor unit of the present invention and the inspection device which uses such a composite optical sensor unit, it is possible to systematically inspect all items of mechanical characteristics such as vertical run-outs, vertical acceleration, eccentricity, radial acceleration and the like and optical characteristics such as optical tilt, reflectivity, inner foreign matter (bubbles, inner inclusions), recording layer defects (pinholes, flaws, oil smear, molding abnormality) , surface defects (surface flaws, surface foreign matters) in appearance.

Further, the composite optical sensor unit according to the present invention exhibits the high resolution, the high accuracy, the wide inspection range and the excellent reproducibility and hence, the composite optical sensor unit can inspect respective items of the mechanical and optical characteristics, appearance inspection and the like of the optical disks including DVD, MO, CD and the like at a high speed.

Further, the composite optical sensor unit according to the present invention provides the simplified structures of the optical system and the mechanical system of the device, exhibits excellent performance in maintenance, performs operations at high accuracy and at a high speed, and can provide the inspection device at a low cost.

Further, the optical disk inspection device of the present invention can perform the inline one hundred percent inspection of the manufacturing steps of the optical disk or steps up to the evaluation test of the optical disk at a high speed.

Still further, the optical disk inspection device of the present invention can perform the inspection at a high speed with high resolution and accuracy, can exhibit wide inspection range, can exhibit excellent reproducibility, and can perform inspection of optical disk such as DVD, MO, CD or including R, R/W, RAM or the like and substrates.

**Claims**

1. A composite optical sensor unit comprising:

   a laser beam source;
   a scanner mirror for distributing laser beams from the laser beam source at a high speed;
   a first beam splitter for applying laser beams distributed by the scanner mirror vertically onto an object of inspection having a concentric diffraction lattice;
   a fifth light receiving element for two-dimensional position detection that receives a zero-order diffraction light reflected from the object of inspection via the first beam splitter and detects a light receiving position; and
   a second light receiving element for receiving an n-order diffraction light reflected from the object of inspection and detecting a received quantity of light.

2. The optical sensor unit according to claim 1, wherein the scanner mirror which distributes the laser beams from the laser beam source at a high speed is mounted on a semiconductor resonance type one-dimensional scanner.

3. The optical sensor unit according to claim 2, wherein the scanner mirror which distributes the laser beams from the laser beam source at a high speed is mounted on a semiconductor resonance type one-dimensional scanner and, at the same time, irradiates laser beams to the object of inspection having the concentric diffraction lattice in the radial direction of the object of inspection.

4. An optical disk inspection device comprising:

   a laser beam source;
   a scanner mirror for distributing laser beams from the laser beam source at a high speed;
   a spindle motor for rotating an object of inspection having a concentric diffraction lattice;
   a first beam splitter for irradiating laser beams distributed by the scanner mirror vertically onto the object of inspection which is being rotated by the spindle motor;
   a fifth light receiving element for two-dimensional position detection that receives a zero-order diffraction light reflected from the object of inspection via the first beam splitter and detects the light receiving position; and
   a second light receiving element for receiving an n-order diffraction light reflected from the object of inspection and detecting a received quantity of light, wherein
   an optical tilt of the object of inspection is calculated based on a detection signal of the fifth light receiving element,
a vertical run-out is calculated based on the optical tilt,
an eccentricity of the object of inspection is calculated based on a detection signal of the second light receiving element, and

an appearance inspection of the object of inspection is performed based on the detection signal of the fifth light receiving element and the detection signal of the second light receiving element.

5. An optical disk inspection device comprising:

a laser beam source;
a scanner mirror for distributing laser beams from the laser beam source at a high speed;
a spindle motor for rotating an object of inspection having a concentric diffraction lattice;
a first beam splitter for irradiating laser beams distributed by the scanner mirror vertically onto the object of inspection which is being rotated by the spindle motor;
a fifth light receiving element for two-dimensional position detection that receives a zero-order diffraction light reflected from the object of inspection via the first beam splitter and detects the light receiving position;
a second light receiving element for receiving an n-order diffraction light reflected from the object of inspection and detecting a received quantity of light, wherein
an optical tilt of the object of inspection is calculated based on a detection signal of the fifth light receiving element,
a vertical run-out is calculated based on the optical tilt,
an eccentricity of the object of inspection is calculated based on a detection signal of the second light receiving element,
an appearance inspection of the object of inspection is performed based on the detection signal of the fifth light receiving, element and the detection signal of the second light receiving element, and
a reflectivity of the object of inspection is calculated based on the detection signal of the fifth light receiving element and the detection signal of the second light receiving element.

6. The optical disk inspection device according to claim 4 or 5, wherein the detection signal of the second light receiving element is a signal which contains an ON/OFF signal of the n-order diffraction light at a boundary between the concentric diffraction lattice and a mirror portion.

7. The optical disk inspection device according to any one of claims 4 to 6, wherein a second beam splitter is provided between the first beam splitter and the fifth light receiving element, the zero-order diffraction light reflected on the object of inspection is received by a first light receiving element in place of the fifth light receiving element via the second beam splitter, and the reflectivity of the object of inspection is calculated based on the detection signal of the first light receiving element and the detection signal of the second light receiving element.

8. The optical disk inspection device according to any one of claims 4 to 7, wherein the appearance inspection is configured to detect types of defects in a separated manner by comparing a change of light quantity and the time-sequential deviation between the detection signal of the fifth light receiving element and the detection signal of the second light receiving element.

9. The optical disk inspection device according to any one of claims 4 to 8, the device judges whether the object of inspection is within a given standard value by comparing results of the optical tilt, a vertical run-out, eccentricity, reflectivity and the appearance inspection with respective predetermined values.

Fig. 1

$$\alpha = \sin \alpha = (m \times \lambda)/d$$
$\lambda$: wavelength
d: lattice distance
m: number of order

inspection visual field

Fig. 2

Fig. 3

light receiving range of PSD

L

d x ( d y )

P S D

31

2 α
(β angle)

f=focal length of lens

f

collimating lens

19

α angle

19

16

α angle

optical disk

31

EP 1 413 852 A1

Fig. 4

Fig. 5

LD1

11
12
13
14

PD2

15
25
18
17
16
31

24
23

$\alpha$

inspection visual field

$\alpha = \mathrm{Sin}\,\alpha = (\mathrm{m} \times \lambda)/\mathrm{d}$
$\lambda$ : wavelength
d: lattice distance
m: number of order

f

Fig. 6

PD2

Focusing

24

17

17

Optical disk

Optical disk clamping portion

31

Inspection area (outer circumference)
Inspection area depending on setting

Inspection area (inner circumference)
Inspection area depending on setting

Non-inspection area

Optical disk recording portion

Fig. 7

Eccentricity/recording area width

+PP = eccentricity maximum value position

Eccentricity data
Recording portion outermost circumferential position data

Eccentricity data
Recording portion innermost circumferential position data

GL

-PP = eccentricity maximum value position

NL

eccentricity maximum value position

Measured deviation width due to diffraction light

Recording area width measuring position

Recording area width data

Rotating direction

0°  90°  180°  270°  360°

Fig. 8

Fig. 9

PSD

PD1

22

21

PD2

① ② ④ ⑥

Scanning direction
tical disk radial direction

③ ⑤

Beam splitter 1
Incidence of strip-like parallel beams
Incident perpendicularly
after being bent by 90°

Inside foreign matter 101

Collimating lens 4

L1  L2

Inside foreign matter 102

24

16

Thickness of optical disk

L1'  L2'

PD1  Waveform of
received light

PD2  Waveform of
received light

L1  L2

Fig. 10

innermost diameter
auxiliary sensor

PD4

5

17

PD2

24

PD2 non-sensing
area

31

sensing area
by PD4

recording portion

Fig. 11

surface defect Ln ≈ L

inside foreign matter
Ln ≠ L or Ln ≠ 0

surface flaw

recording layer
defect Ln ≈ 0

surface foreign
matter

inside
inclusion

abnormal molding

16

thickness L of
optical disk

bubbles

oil smear

pinhole

flaw

Fig. 12

1 revolution ≈ 1 second

laser spot beams ϕ50μm
having defect inspection
ability of 15μm₁

outermost
circumference 25μm

14400 scanning
per 1 turn

finely divided by 0.025°

16

51.2mm

scanning width·
31.3μ second
resolution of 2048
resolution of
tilting angle of 128

Fig. 13

Composite optical sensor unit

Analogue unit

System control part

PSD

X — X position data

Y — Y position data

P — PSD1 light Quantity inputting

13

Zero-order diffraction light — PD1 — PD1 light Quantity inputting

First-order diffraction light — PD2 — PD2 light Quantity inputting

LDI light quantity monitor — PD3 — PD3 light quantity inputting

Semiconductor laser light source — LD1

Buffered A/D converter

20Mhz 64Mbyte **51**

Fast buffered A/D converter

100Mhz 64Mbyte **52**

**53** Laser control circuit

Laser output control

Edge detecting signal

**58** Equalizing clock generating circuit

**57** Scanner control circuit

Synchronizing clock outputting

Writing/reading

Process controller **54**

Robot control

**55** Spindle motor

Automatic centering control circuit

Starting/releasing of centering

Motor driver

**56** Encoder control circuit

Servo motor control **59**

System control

Status inputting

Digital I/O

Control CPU

Memory 512Mbyte

HDD 20Gbyte

CD-ROM FDD Net controller

**60**

Host CPU

CRT display

Keyboard, mouse

Printer

Fig. 14

mirror scanning origin resetting

61

inside edge position in recording portion

65.5Mhz → clock generating X4

scanning position counter

inside edge register → reading

64 — inside position register detection starting position

writing →

62

mask generating circuit

generation of detection enable permission signal

65 — outside position register detection starting position

outside edge position in recording portion

outside edge register → reading

66 — detection width register detecting window

262Mhz

69

sample clock 1
sample clock 2

68 + −

PD2 signal → comparator binary signal

clock synchronizing circuit

generation of sample clock

67

63

EP 1 413 852 A1

Fig.15

main flow

```
        ┌─────────────────────────────────┐
        │      start measurement          │
        └─────────────────────────────────┘
        ┌─────────────────────────────────┐
        │      #1 data sampling           │
        └─────────────────────────────────┘
        ┌─────────────────────────────────┐
        │ #2 correct recording portion    │
        │ edge data based on width data   │
        └─────────────────────────────────┘
        ┌─────────────────────────────────┐
        │ #3 calculate eccentricity in    │
        │ radial direction/eccentricity   │
        │ acceleration                    │
        └─────────────────────────────────┘
        ┌─────────────────────────────────┐
        │   #4 calculate optical tilting  │
        └─────────────────────────────────┘
        ┌─────────────────────────────────┐
        │ #5 calculate vertical           │
        │ run-out/vertical acceleration   │
        └─────────────────────────────────┘
        ┌─────────────────────────────────┐
        │ #6 inspect reflectivity and     │
        │ defect in appearance            │
        └─────────────────────────────────┘
        ┌─────────────────────────────────┐
        │      #7 judge result            │
        └─────────────────────────────────┘
```

**Fig. 16**

#1 data sampling sequence

① 

start data sampling —— S1

start spindle
start scanner
line counter=0 —— S2

sample counter=0 —— S3

scanning origin position — No — S4

origin

synchronize fetching clock
store data one time for every eight
timeswith respect to PSD1, PD3
store data every time for PD1, PD2
sample counter +1 —— S5

sample counter=2048 points — No — S6

2048

line counter+1 —— S7

read/store inside recording edge register
read/store outside recording edge register —— S8

outside recording edge - inside recording edge = width data
store width data —— S9

line counter=14400 — No — S10

14400

stop spindle
stop scanner —— S11

finish data sampling —— S12

②

Fig. 17

#2 correction of whole circumference recording edge data based on width data

②
start correction ⟋ S13

perform approximate interpolation calculation of width data using sinusoidal
curves at 14400 points
perform correction of influence such as local defect, address mark or the like  ⟋ S14

search maximum value (PP value) of width data at 14400 points
store the maximum value as width PP value  ⟋ S15

correct inside edge data of recording portion of 14400
inside recording edge data + (width PP value – width data)
restore the value  ⟋ S16

correct outside edge data of recording portion of 14400
outside recording edge data + (width PP value – width data)
restore the value  ⟋ S17

finish correction — S18
③

Fig. 18

#3 calculate eccentricity in radial direction/eccentricity acceleration based on full-circle inner circumferential/outer circumferential edge data

③

start calculation of eccentricity ⟋ S19

| |
|---|
| perform approximate interpolation calculation of inner circumferential recording edge data using sinusoidal curves at 14400 points<br>perform correction of influence such as local defect, address mark or the like<br>perform approximate interpolation calculation of outer circumferential recording edge data using sinusoidal curves at 14400 points<br>perform correction of influence such as local defect, address mark or the like |

⟋ S20

search maximum value (PP value) of inner circumferential recording edge data at 14400 points
store the maximum value as inner circumference + PP value — S21

search minimum value (PP value) of inner circumferential recording edge data at 14400 points
store the maximum value as inner circumference - PP value — S22

(inner circumference + PP value) – (inner circumference – PP value)/2 = inside eccentricity — S23

search maximum value (PP value) of outer circumferential recording edge data at 14400 points
store the maximum value as outer circumference + PP value — S24

search minimum value (PP value) of outer circumferential recording edge data at 14400 points
store the minimum value as outer circumference - PP value — S25

(outer circumference + PP value) – (outer circumference – PP value)/2 = outer circumferential eccentricity — S26

(inner circumferential eccentricity + outer circumferential eccentricity)/2 = work eccentricity — S27

calculate eccentricity acceleration by performing second-order differential of eccentricity (distance) data — S28

perform graphic plotting (drawing) based on inner circumferential recording edge data and outer circumferential recording edge data by one circumference of 360° when necessary — S29

finish calculation of eccentricity ⟋ S30

④

Fig. 19

#4 calculation of optical tilting

④

start calculation of optical tilting ～ S31

processing counter = 0 ～ S32

equalize 8 lines out of data of whole circumference 14400 lines and extract as 1 line ～ S33

calculate β angle and α angle (tilting angles) with respect to focal length f based on data of PSD1 and dx (dy) data at 256 points of 1 line ～ S34

processing counter + 1 ～ S35

processing counter = 1800      No

1800            S36

perform graphic plotting (drawing) of whole data of optical tilting β angle and α angle (tilting angle) in circumferential direction as well as in radial direction when necessary ～ S37

finish calculation of optical tilting ～ S38

⑤

Fig. 20

#5 calculate vertical run-out/vertical acceleration

⑤

start calculation of vertical run-out/acceleration — S39

● radial direction

processing counter = 0 — S40

calculate height deviation of each measuring point based on optical tilt α angle and 256 data per 1 line using $\Delta h1 = \Delta c \tan\theta$ — S41

calculate vertical acceleration in the radial direction by performing first-order differential of angle data based on optical tilt α angle and 256 data per 1 line — S42

calculate cumulative height deviation in the radial direction (vertical run-out in the radial direction) — S43

processing counter +1 — S44

No

processing counter = 1800 — S45

1800

perform graphic plotting (drawing) of whole data in the radial direction including arbitrary position in the radial direction when necessary — S46

● circumferential direction

processing counter = 0 — S47

calculate height deviation of each measuring point based on optical tilt α angle and 1800 data in the circumferential direction at the same position using $\Delta h1 = \Delta c \tan\theta$ — S48

calculate vertical acceleration in the circumferential direction by performing first-order differential of angle data based on optical tilt α angle and 1800 data in the circumferential direction at the same position — S49

calculate cumulative height deviation in the circumferential direction (vertical run-out in the circumferential direction) — S50

processing counter +1 — S51

No

processing counter = 1800 — S52

256

perform graphic plotting (drawing) of whole data in the radial direction including arbitrary position in the circumferential direction when necessary — S53

finish calculation of vertical run-out/acceleration — S54

⑥

Fig. 21

#6 reflectivity and appearance image developing/appearance defect inspection

⑥

Start reflectivity / image developing/appearance defect inspection ～ S55 ● Reflectivity

| Form appearance gray scale image of zero-order light by developing two-dimensionally 2048 point data in the radial direction of PD1 at circumferential 14400 lines | ～ S56 |

| Form appearance gray scale image of zero-order light by developing two-dimensionally 2048 point data in the radial direction of PD2 at circumferential 14400 lines | ～ S57 |

| Form corresponding data of laser output by developing two-dimensionally 256 point data in the radial direction of PD3 at circumferential 14400 lines | ～ S58 |

| Two-dimensional developing data of PD3 are added at 8 points in the circumferential direction to form averaged data, and laser output data at respective positions in a 256 points × 1800 points plane are set to p0 | ～ S59 |

| Two-dimensional developing data of PD1 and PD2 are added at 8 points in the radial direction and at 8 points in the circumferential direction to form 8 × 8 averaged data, and laser output data at respective positions in 256 points × 1800 points plane are set to p1, p2 | ～ S60 |

| Calculate reflectivity at each point of 256 × 1800
Calculate reflectivity = $n1 \cdot p1/p0 + n2 \cdot p2/p0 + n3$
n1, n2, n3 are intrinsic constants which material of optical disk or the optical system has. | ～ S61 |

● Appearance defect inspection

| In zero-order appearance gray image picture which is developed two-dimensionally, portions which are below threshold value are turned into retrieval binary picture and the set processing of particles is performed | ～ S62 |

| In first-order appearance gray image picture which is developed two-dimensionally, portions which are below threshold value are turned into retrieval binary picture and the set processing of particles is performed | ～ S63 |

| When the set of particles (area of defects) in zero-order binary image exceeds predetermined value, it is judged that there exist appearance defects | ～ S64 |

Defective area exceeds predetermined value?

Defect not present / Defect present ～ S65

| Discovered defect positions in zero-order light and discovered defect positions in first-order binary image are compared in the radial direction (scanning direction), time differences at positions are calculated and compared and depth positions of discovered zero-order light defects are judged and the defects are classified | ～ S66 |

finish reflectivity/image developing/ defect inspection ～ S67

⑦

Fig. 22
#7 ... Judgment of result

⑦

Start judgment of result ～— S68

Not exceed — Judge whether eccentricity exceeds predetermined value or not ～ S69

Exceed

Report that there exists eccentricity defect is made ～ S70

Not exceed — Judge whether optical tilting angle exceeds predetermined value or not ～ S71

Exceed

Report that there exists tilting defect is made ～ S72

Not exceed — Judge whether vertical run-out in the radial direction or the circumferential direction exceeds predetermined value or not ～ S73

Exceed

Report that surface deflection defect exists is made ～ S74

Not exceed — Judge whether vertical acceleration exceeds predetermined value or not ～ S75

Exceed

Report that there exists vertical acceleration defect is made ～ S76

Not exceed — Judge whether reflectivity exceeds predetermined value or not ～ S77

Exceed

Report that there exists reflectivity defect is made ～ S78

Not exceed — Judge whether appearance defect exceeds predetermined value or not ～ S79

Exceed

Report that there exists appearance defect is made and size, position and depth are specified and defect is classified ～ S80

Finish judgment of result ～ S81

## INTERNATIONAL SEARCH REPORT

International application No.

PCT/JP02/07495

**A. CLASSIFICATION OF SUBJECT MATTER**
Int.Cl$^7$ G01B11/26, G01B11/30, G01B11/00, G01N21/95, G11B7/26

According to International Patent Classification (IPC) or to both national classification and IPC

**B. FIELDS SEARCHED**

Minimum documentation searched (classification system followed by classification symbols)
Int.Cl$^7$ G01B11/00-11/30, G01N21/84-21/958, G11B7/26

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | US 5646415 A (Sony Disc Technology Inc.),<br>08 July, 1997 (08.07.97),<br>Full text; all drawings<br>& JP 8-62150 A    & US 5914495 A | 1-7,9<br>8 |
| Y<br>A | JP 9-229650 A (Japan EM Kabushiki Kaisha),<br>05 September, 1997 (05.09.97),<br>Full text; all drawings<br>(Family: none) | 1-7,9<br>8 |
| Y | JP 2000-97675 A (Victor Company Of Japan, Ltd.),<br>07 April, 2000 (07.04.00),<br>Full text; all drawings<br>(Family: none) | 6 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>02 October, 2002 (02.10.02) | Date of mailing of the international search report<br>15 October, 2002 (15.10.02) |
| Name and mailing address of the ISA/<br>Japanese Patent Office | Authorized officer |
| Facsimile No. | Telephone No. |

Form PCT/ISA/210 (second sheet) (July 1998)

| INTERNATIONAL SEARCH REPORT | International application No. |
| --- | --- |
| | PCT/JP02/07495 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | US 4632546 A (Erwin Sick GmbH. Optik-Elektronik), 30 December, 1986 (30.12.86), Full text; all drawings & JP 60-89735 A & EP 0123929 A2 | 1-9 |
| A | Microfilm of the specification and drawings annexed to the request of Japanese Utility Model Application No. 15395/1990(Laid-open No. 106524/1991) (Ricoh Co., Ltd.), 05 November, 1991 (05.11.91), Full text; all drawings (Family: none) | 1-9 |

Form PCT/ISA/210 (continuation of second sheet) (July 1998)